Europäisches Patentamt

European Patent Office

Office européen des brevets

(11) Publication number: **0 176 833**
**A2**

# (12) EUROPEAN PATENT APPLICATION

(21) Application number: **85111572.5**

(22) Date of filing: **13.09.85**

(51) Int. Cl.⁴: **G 06 F 15/72**

(30) Priority: **01.10.84 US 656611**

(43) Date of publication of application:
**09.04.86 Bulletin 86/15**

(84) Designated Contracting States:
**DE FR GB NL**

(71) Applicant: **TEKTRONIX, INC.**
Tektronix Industrial Park D/S Y3-121 4900 S.W. Griffith
Drive P.O. Box 500
Beaverton Oregon 97077(US)

(72) Inventor: **Weiner, Herbert S.**
10032 S.E. Linnwood
Milwaukie Oregon 97222(US)

(72) Inventor: **Gordon, Samuel Young**
10440 S.W. Paulina Drive
Tualatin Oregon 97062(US)

(72) Inventor: **Lau, Chi-Leung**
5876 S.W. 164th Court
Aloha Oregon 97007(US)

(72) Inventor: **Mills, William L.**
12620 S.W. Colony 3
Beaverton Oregon 97005(US)

(72) Inventor: **Perkins, Charles E.**
Watson Street Road 1, Box 259
Peekskill New York 10566(US)

(72) Inventor: **Mayhew, Jeffrey P.**
19430 S.W. Deline
Aloha Oregon 97007(US)

(74) Representative: **Strasse, Joachim, Dipl.-Ing. et al,**
Am Markt 11 Postfach 793
D-6450 Hanau/Main(DE)

(54) Method and apparatus for creating a structured image data set based on acquired image data.

(57) A method of structuring vectorized data obtained by scanning a drawing or other document comprising the steps of displaying on a computer controlled display screen a template image comprising template lines and nodes corresponding to the acquired image data and selecting portions of the acquired image data to be designated for inclusion in a restructured image data set by using a screen cursor to select the corresponding template lines displayed on the screen. Inclusion designations are subsequently and selectively removed as desired from portions of the acquired image data from the structured data set by using the cursor to select the corresponding lines and nodes on the screen. When the desired portions of the acquired data set are selectively designated for inclusion in the restructured data set, all remaining designated data is copied into the restructured image data.

Croydon Printing Company Ltd.

## METHOD AND APPARATUS FOR CREATING A STRUCTURED IMAGE DATA SET BASED ON ACQUIRED IMAGE DATA

### Background of the Invention

The present invention relates in general to computer-aided drawing systems and in particular to a method and apparatus for structuring data acquired by vectorizing a drawing so that such data may be accessed and manipulated by a computer-aided drawing or design system.

Computer-aided drawing or design (CAD) systems permit users to create and modify drawings formed on a CRT screen, and to store and retrieve data which may be used to recreate the drawing either on the CRT or on paper using a hard copy graphics output device such as a plotter or a printer. In the prior art, attempts have been made to improve the usefulness of CAD systems by providing digitizing means to convert a drawing on paper to a set of representative data compatible with the data used by a CAD system, permitting the CAD system to use the data to store, modify and reprint the original or modified drawing.

One such digitizing means is the automatic picture coding system described in prior U.S. application Serial No. 624,434, filed June 25, 1984, by Benjamin E. McCann and Michael L. Rieger for "Method of Pixel to Vector Conversion in an Automatic Picture Coding System", wherein a bit-map image of the drawing is created by a scanning means such as a facsimile drum scanner, and then encoded into a set of representative line segments which are converted into vectorial representations compatible with the data used by many CAD systems.

While this raw vectorial data representing the drawing may be in a CAD system compatible form, the image recreated by the CAD system using it will generally not be structured in a way that can be easily manipulated by the CAD system. For instance, the drawing image may contain irrelevant marks or stains appearing on the original drawing along with erroneous inclusions or omissions resulting from inaccuracies in the digitizing process. Operators can sometimes use CAD systems to restructure the raw vectorial data correcting these problems but CAD systems are typically designed to operate on images created by the systems themselves and use of the CAD system itself to restructure the data can be time consuming and sometimes ineffectual.

Therefore what is needed is a method and apparatus for receiving raw vectorial data produced by a digitizing means and allowing an operator to quickly and easily restructure the data in a structural form compatible with a CAD system.

## Summary of the Invention

In accordance with one aspect of the invention, a vectorial data representation of a picture produced by a digitizing means is stored in a computer memory and used by the computer to display an image of the picture on a cathode ray tube (CRT) screen. The image is formed by a set of nodes and line connections therebetween, the arrangement of the nodes and connections being defined by the vector data. An operator uses the image as a "template" to restructure the stored vectorial data for subsequent use by a computer-aided design and drafting (CAD) system.

An operator controls the movement of a cursor on the screen by operating a graphic input device such as a tablet and stylus. If the data representing a line displayed on the screen is to be included in the restructured vectorial data set, a user may temporarily tag the data as being so included by using the stylus to select a "pencil" mode from a menu displayed on the screen and then approximately tracing or identifying the line on the template with the cursor in much the same way that a draftsperson would use a pencil and template to trace a pencil drawing. The line on the template is identified as being penciled in by a change in color. The totality of lines so traced in pencil mode becomes a "penciled structure" representing all such data temporarily tagged for inclusion in the restructured vectorial data set.

In another aspect of the invention, a user may delete penciled lines from the penciled structure by selecting an "erase" mode and then tracing or identifying the pencil line with the cursor acting like an eraser. The corresponding vector data is untagged and the template line image on the screen returns to original color.

In a further aspect of the invention, a user may permanently tag the data corresponding to a pencil structure he has thus created by using the stylus to select an "Ink Penciled Structure" command appearing on the menu in much the same way that a draftsman might ink in a penciled drawing when he is satisfied that the pencil drawing is correct. Permanently tagged data is sent to an output data file, becomes a permanent part of the restructured data set and cannot be erased. "Inked" lines are represented on screen by a further change in color of the template line.

According to still another aspect of the present invention, the user may select lines for penciling or erasing by locating the cursor in the vicinity of the lines, the selected template lines being automatically traced. The maximum distance between cursor and line for a line selection to occur is adjustable. Thus the operator does not have to laboriously trace over each line.

In a further aspect of the present invention, template lines may be temporarily removed from view ("masked") by selecting the lines with a cursor and the masked template lines may be restored to view by selecting an "unmask" command from the menu.

In view of the foregoing, it is an object of the present invention to provide an improved method of structuring data produced by a drawing vectorizing means for use by a CAD system.

It is another object of the present invention to minimize the amount of manual labor required to restructure data produced by a drawing digitizer, thereby reducing opportunity for human error.

It is a further object of the present invention to provide means to temporarily and permanently restructure digitized drawing data, such means being operated in a similar fashion as a draftsperson may use a template to create pencil and ink drawings, so that operation seems familiar to a skilled draftsperson thereby reducing operator training requirements.

The subject matter of the present invention is particularly pointed out and distinctly claimed in the concluding portion of this specification. However, both the organization and method of operation, together with further advantages and objects thereof, may best be understood by reference to the following description taken in conjunction with the accompanying drawings wherein like reference characters refer to like elements.

### Description of the Drawings

FIG. 1 is a block diagram of a system suitable for use with the present invention,

FIG. 2 is a diagram depicting the areas of the graphics input device of FIG. 1 used to select display of the menu and the drawing on the screen of FIG. 1,

FIGS. 3-10 are flow charts generally illustrating computer implemented portion of the process in accordance with the present invention,

FIGS. 11-32 are flow charts generally depicting subroutines called by the computer implemented process illustrated in FIGS. 2-9,

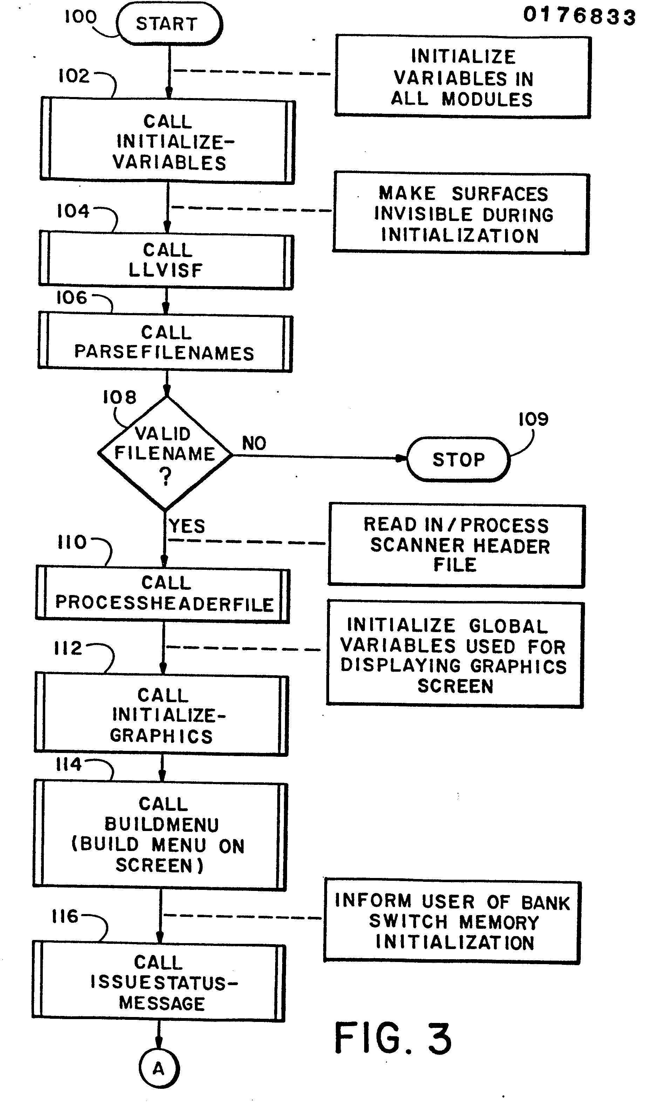

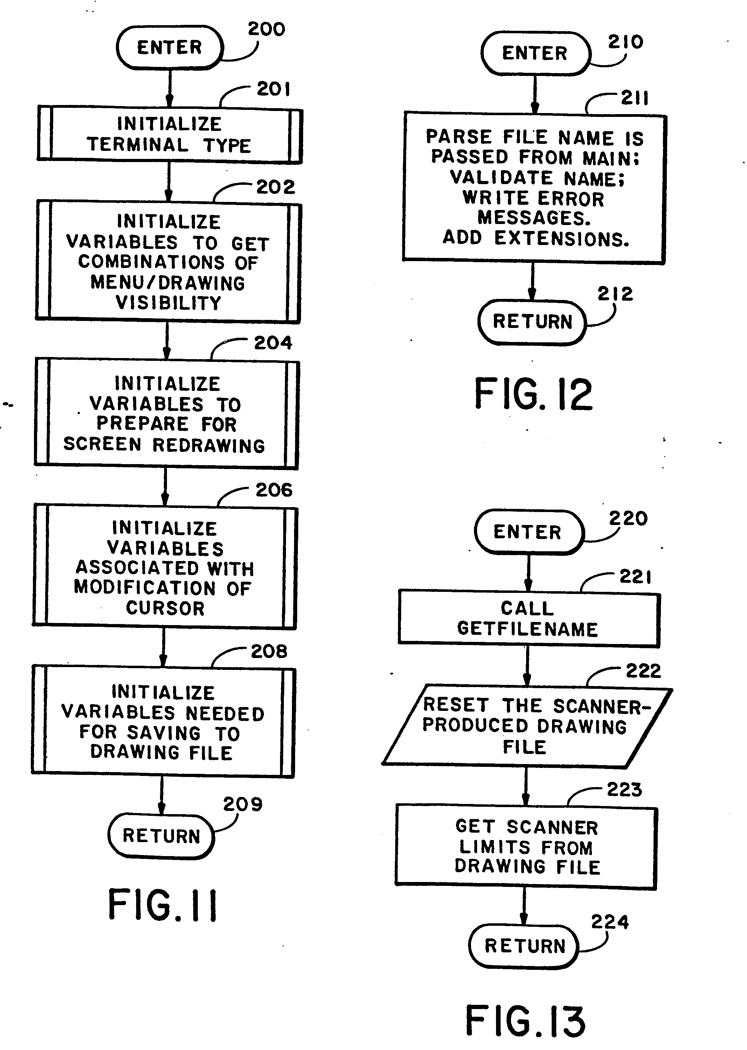

FIG. 11 is a flow chart of the Initialize-Variables subroutine of FIGS. 3-10,

FIG. 12 is a flow chart of the ParseFileNames subroutine of FIGS. 3-10,

FIG. 13 is a flow chart of the ProcessHeader-File subroutine of FIGS. 3-10,

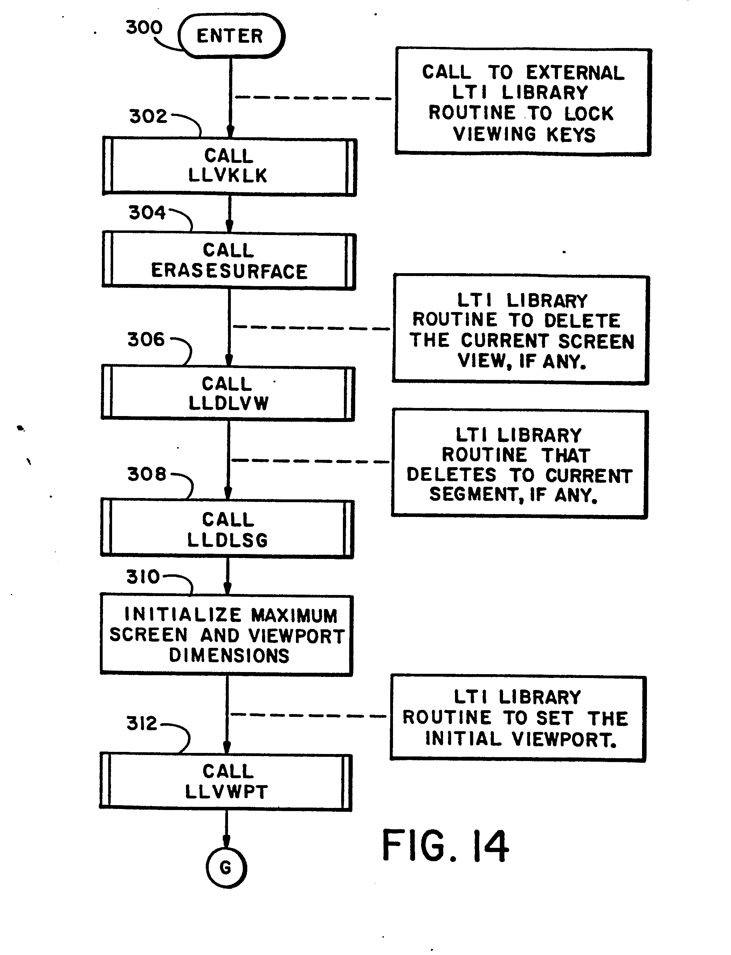

FIGS. 14-15 are a flow chart of the InitializeGraphics subroutine of FIGS. 3-10,

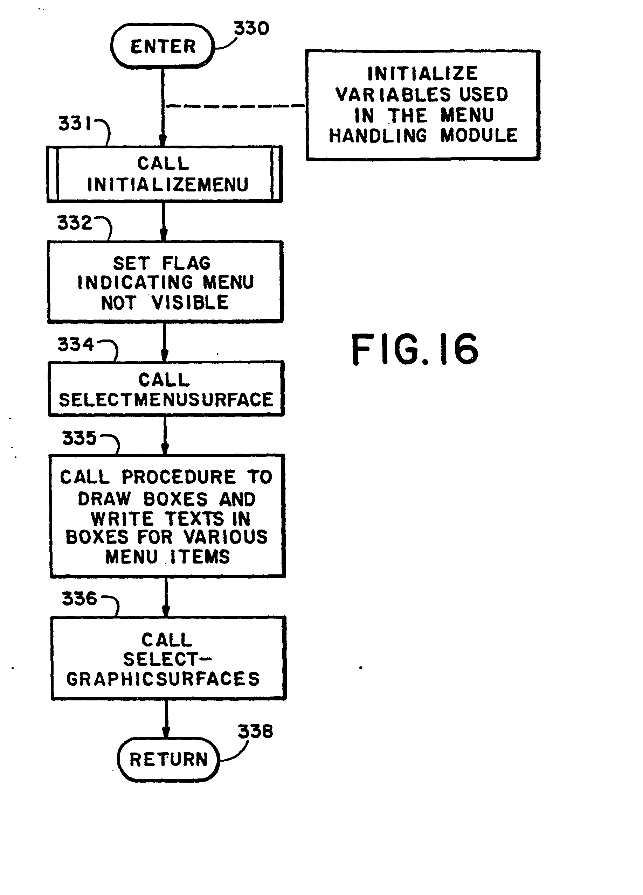

FIG. 16 is a flow chart of the BuildMenu subroutine of FIGS. 3-10,

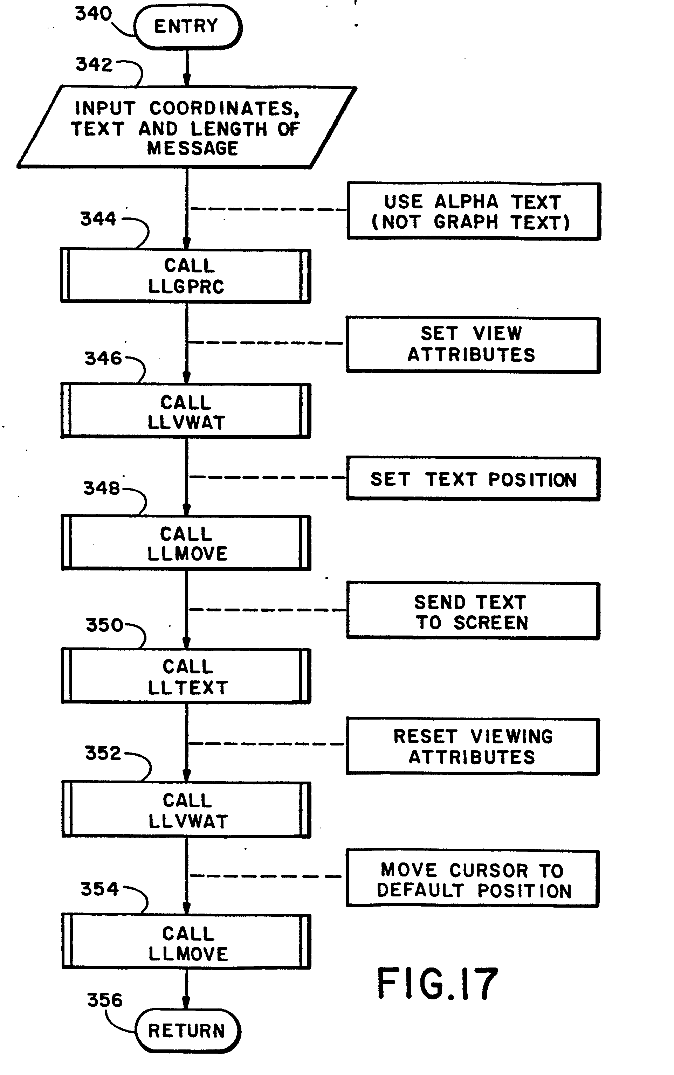

FIG. 17 is a flow chart of the IssueStatus-Message subroutine of FIGS. 3-10,

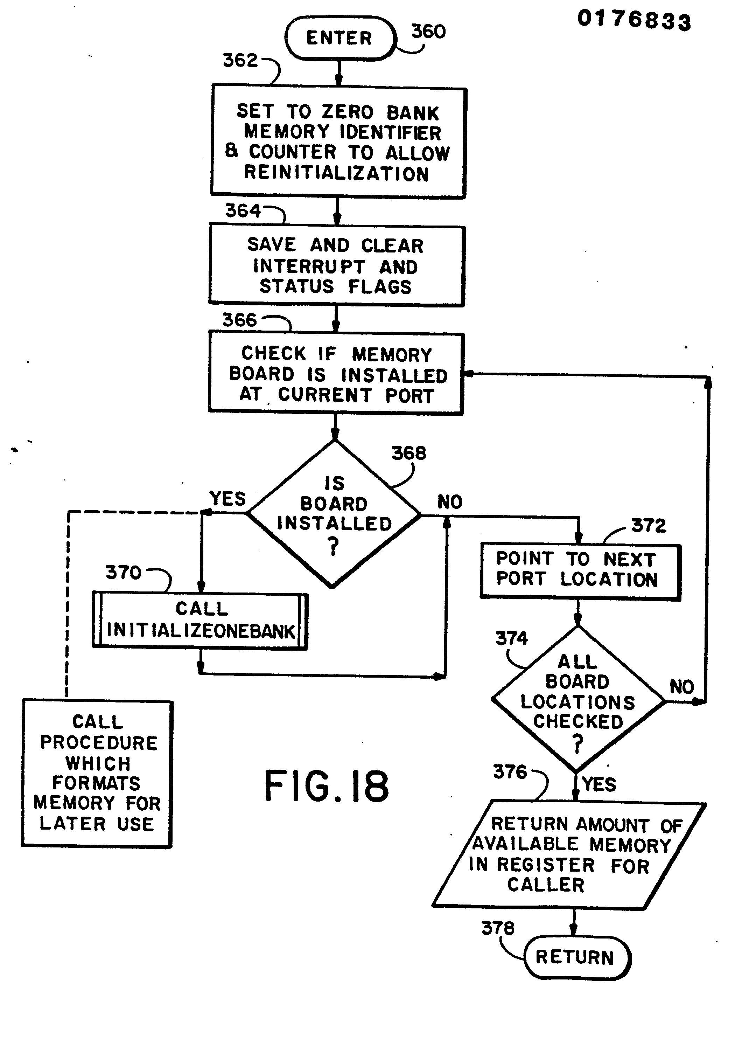

FIG. 18 is a flow chart of the InitializeBank-SwitchedMemory subroutine of FIGS. 3-10,

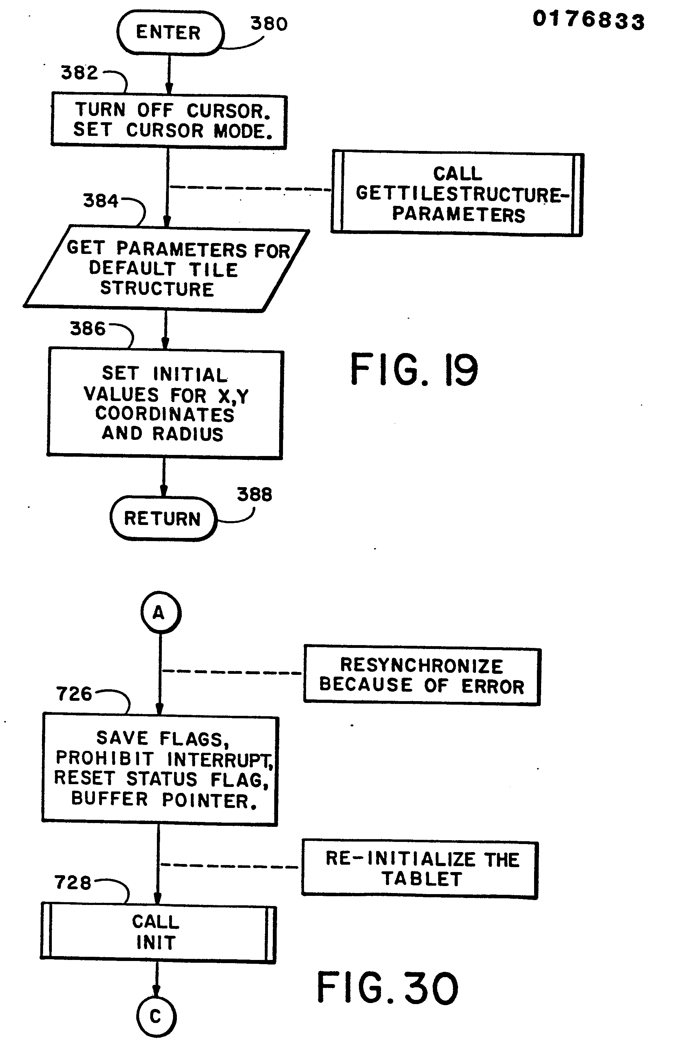

FIG. 19 is a flow chart of the Initialize-CursorDrawing subroutine of FIGS. 3-10,

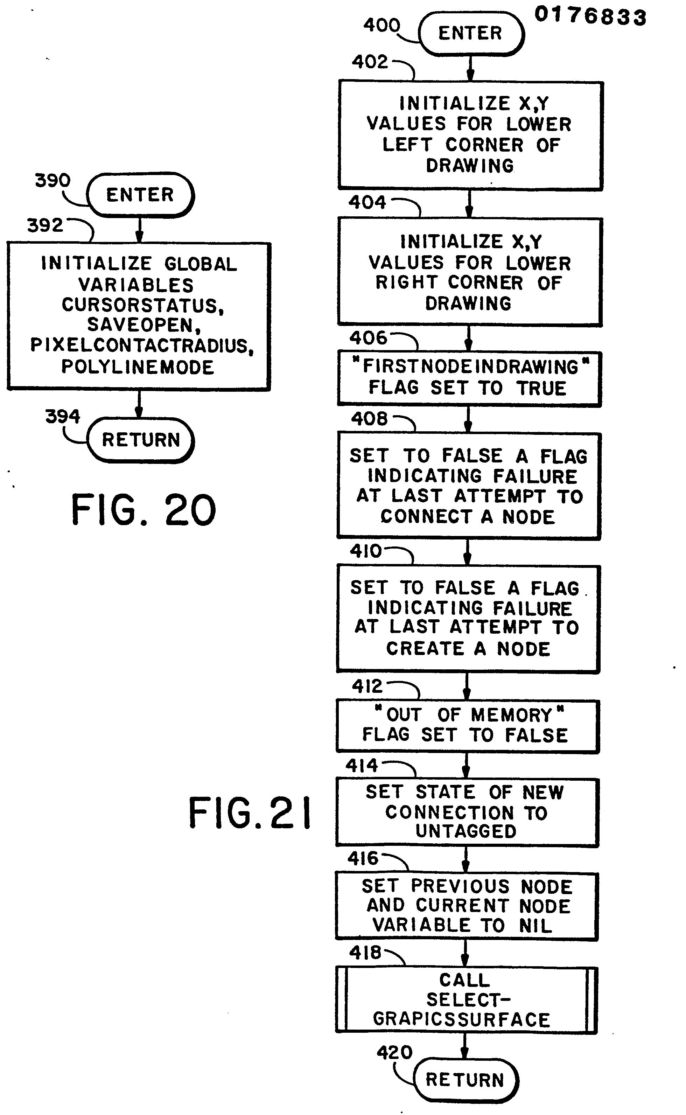

FIG. 20 is a flow chart of the Initialize-NibbleCursor subroutine of FIGS. 3-10,

FIG. 21 is a flow chart of the Initialize-

Drawing subroutine of FIGS. 3-10,

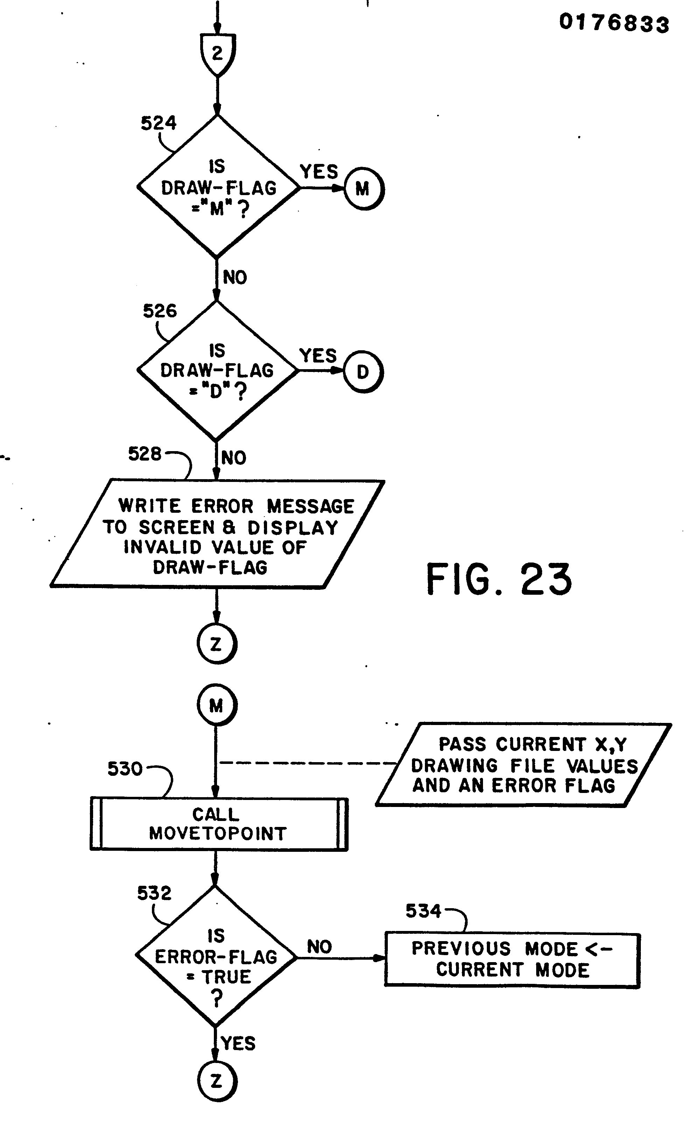

FIGS. 22-25 are a flow chart of the Read-Drawing subroutine of FIGS. 3-10,

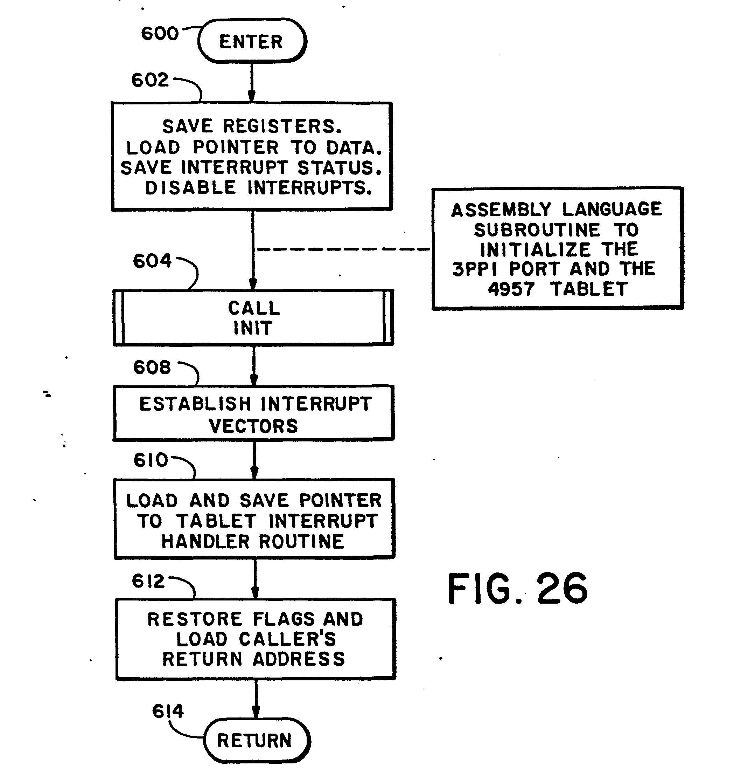

FIGS. 26-27 are a flow chart of the GetGin subroutine of FIGS. 3-10,

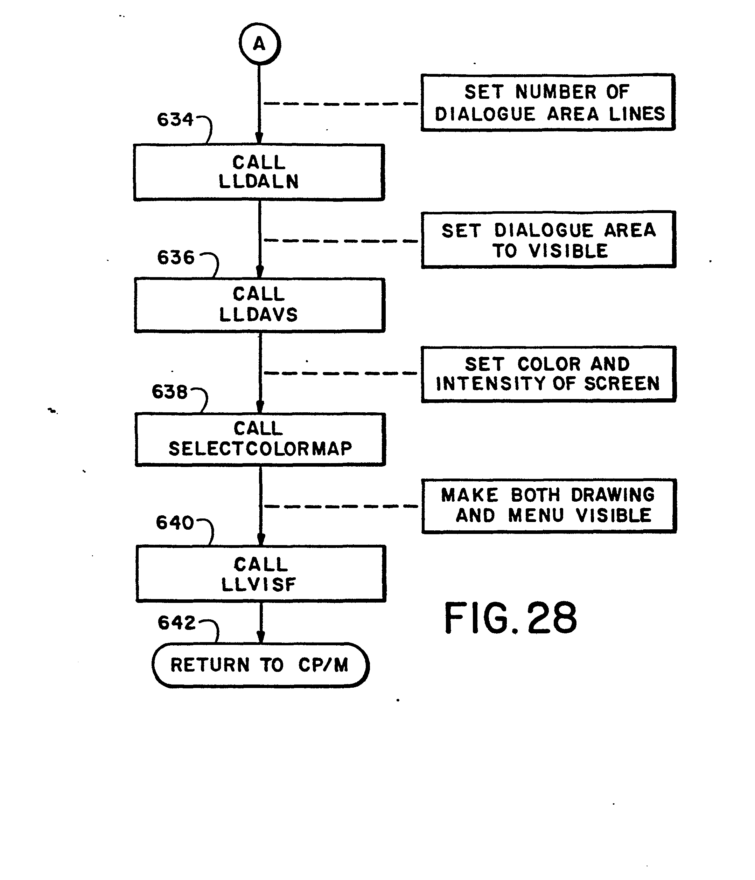

FIG. 28 is a flow chart of the CrossHairOff subroutine of FIGS. 3-10,

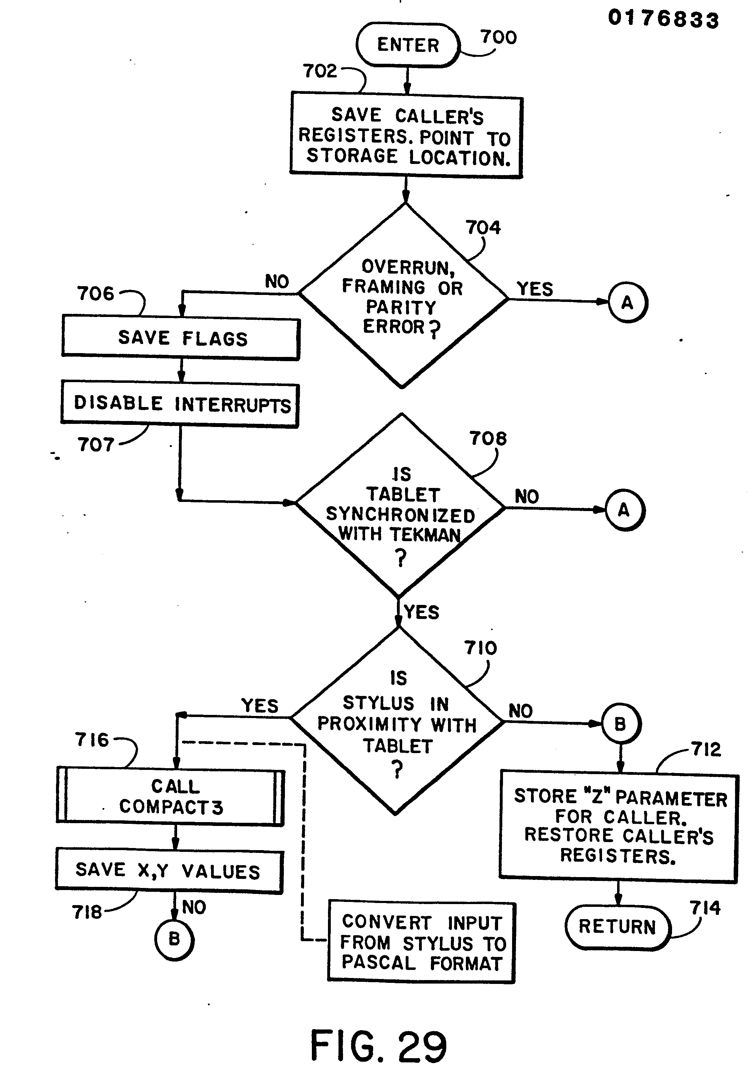

FIG. 29 is a flow chart of the TabletDemultiplexer subroutine of FIGS. 3-10,

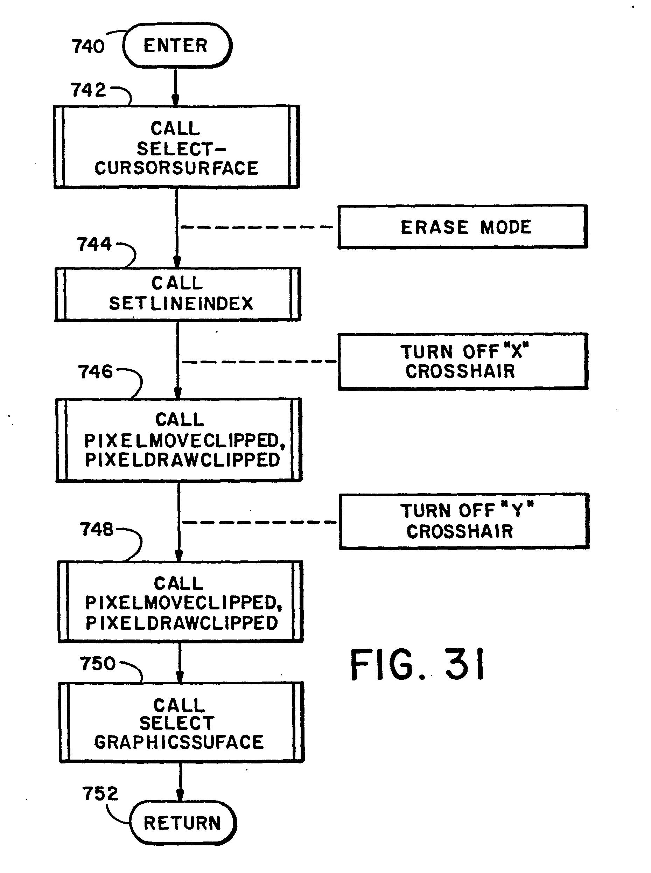

FIG. 30 is a flow chart of the OpenTablet subroutine FIGS. 3-10,

FIGS. 31-32 are a flow chart of the Exit subroutine of FIGS. 3-10,

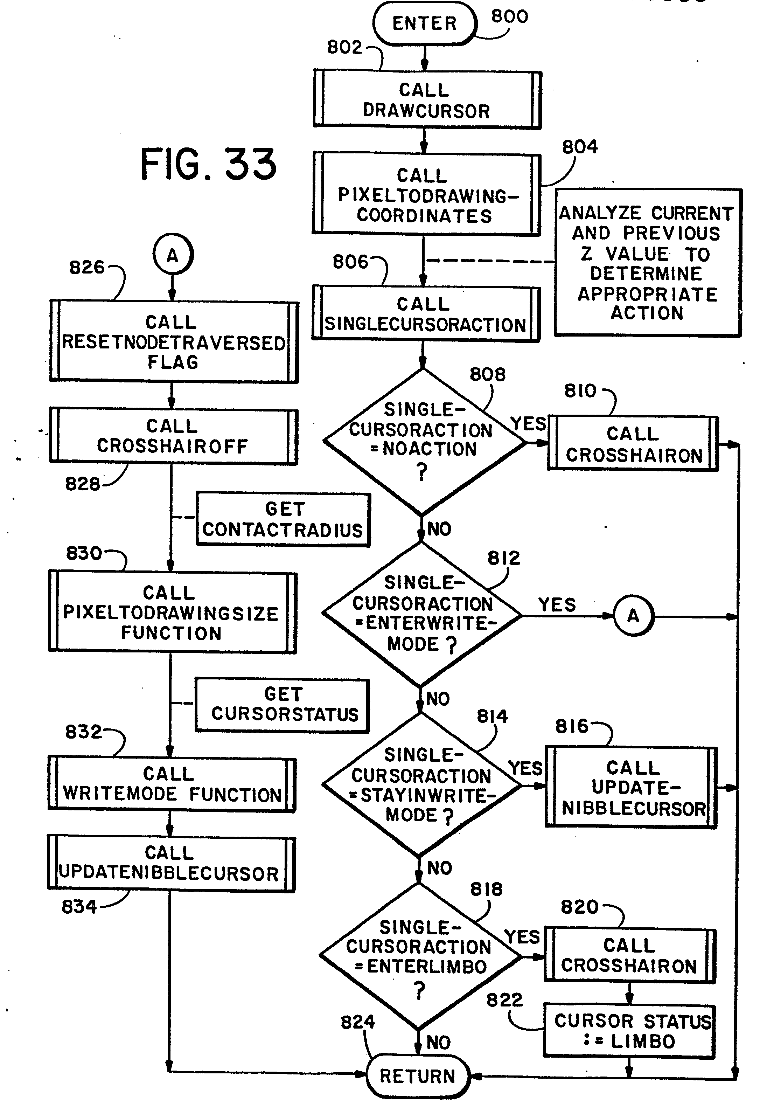

FIG. 33 is a flow chart of the HandleTabletEvent subroutine of FIGS. 3-10, and

FIG. 34 is a flow chart of the CheckMenu subroutine of FIGS. 3-10.

## Detailed Description

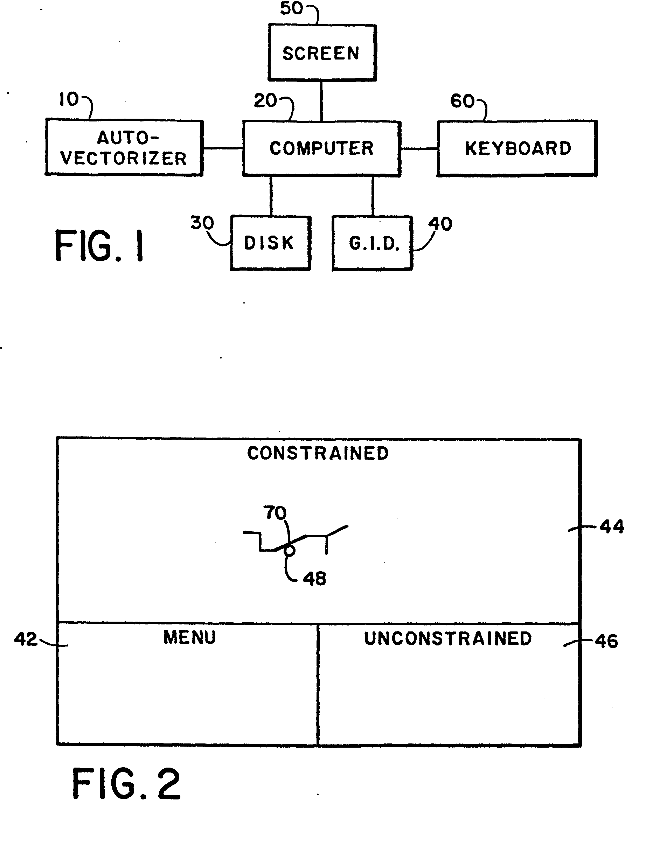

FIG. 1 is a block diagram of a system in which the present invention may be used. Autovectorizer 10 is a device, controlled by computer 20, which scans a drawing and transmits to computer 20 a set of data comprising vector formatted representations of the drawing. Computer 20 stores the data under a suitable file name on a floppy disk in disk drive 30. In the preferred embodiment autovectorizer 10 is a Tektronix model 4991 Autovectorizer and computer 20 is a Tektronix model 4115B Color Graphics Terminal with CP/M disk operating system and including a three-port interface for connecting to a graphics input device 40, floppy disk drive 30, keyboard 60, dual 10-megabyte disks (not shown) and 2 megabytes of random access memory. Also employed to practice the invention in the preferred embodiment area Textronix model 4957 graphics tablet (graphics interface device 40) with one button stylus, a Tektronics model 4100P01 Assembler program, a Pascal language compiler, and a data restructuring program as listed in Appendix I to this specification and as flowcharted in FIG. 3 to 34.

Referring to FIG. 1, autovectorizer 10 is a device for scanning a drawing, obtaining a bit map representation of the drawing, and then encoding the bit map into a data set of vectorial representations compatible with the data used by many CAD systems. In the vector format, the drawing is represented by a set of nodes corresponding to points on the drawing and by a set of straight lines beginning and ending on nodes. A node may therefore represent an independent dot on the drawing, the end of a line, or a connection between two or more lines. For instance, a circle on the drawing may be represented by a large number of short, straight lines connected by nodes and arranged in a loop. This data is passed to computer 20 or another interfaced computer and stored in a file having a drawing file name on a floppy or hard disk controlled by the interfaced computer.

An operator, wishing to restructure the data contained on the disk, for instance to eliminate unwanted portions of the drawing image or to reform poorly represented portions, can insert the disk into disk drive 30 of FIG. 1, and load and run the data restructuring program listed in Appendix I passing to it the drawing file name. The program formats a portion of its memory into a "tile" structure and then reads drawing data from file into the tile structure in a spatial format.

In the spatial format, a pointer to information about each node is stored in the tile structure. The pointer indicates the location in memory containing information about the node including the x,y coordinates of the node and pointers indicating the storage address associated with every other node in the drawing to which the node may be connected along with information about the characteristics of the connection or line bounded by the two nodes. As the drawing data is read into the tile structure, an image of the drawing is displayed on screen 50.

A line may have any of four characteristics: it may be a "template" line, a "pencil" line, an "ink" line, or a "masked template" line or a combination thereof. Initially, when the drawing data is read into the tile structure, all the lines in the drawing are template lines. Once the drawing data is fully read into the tile structure and the drawing is displayed on screen 50, the operator may use a screen cursor controlled by the movement of a stylus on tablet 40 to select template lines to be "penciled" in much the same way a draftsman may use a pencil and a template to create a pencil line. Here, an operator moves the cursor to the line by moving the stylus on tablet 40 and then depressing the stylus to operate a switch to indicate that the line is selected. By keeping the stylus depressed he may select all lines the cursor crosses as he moves it along the drawing. When a line is penciled, the data in the tile structure represented by that line is accordingly flagged.

Once the operator has selected a number of template lines to be penciled he may convert the "pencil structure" thus created to an "ink structure" by using the stylus and tablet to access a
menu and selecting an "ink pencil structure"
command from the menu. This causes the stored data
representing the inked lines to be so flagged and
it also causes vector formatted data representing
the ink lines to be stored in an output file.

The operator may erase a pencil line by
selecting an "erase" mode from the menu and then
using the cursor to select pencil lines to be
erased. When a pencil line is erased, the
indicating flag which is associated with the tile
structure data is reset to indicate a template line
only. The operator may also cause the program to
erase the entire penciled structure by selecting an
"erase pencil structure" command from the menu.
However ink and template lines are permanent and
are not erased.

An operator may mask a template line from
view, however, by using the menu to select a "mask
template" mode and then selecting the template
lines to be masked using the cursor. This permits
the operator to temporarily remove template lines
for clarity, particularily in a densely lined
drawing. Later the operator may unmask all masked
template lines by using the menu to select an
"unmask template" command. The software will then
automatically unmask and display all template
lines.

Usually an operator wishes to create a new
vector data set which can be used to create a new
drawing not having unwanted lines and nodes which
may have resulted from smudges on the original
drawing, errors in the vectorizing process, or he
may want to create a new drawing consisting of only a portion of the original.  Once the drawing is displayed on the screen, he selects a "pencil" cursor mode from the menu and then uses the cursor to select template lines to be penciled in.  If he includes an unwanted line by mistake, he may select the erase mode and select pencil lines to be erased. Once the operator is satisfied that all lines in the pencil structure are to be saved, he selects the "ink pencil" structure command from the menu and all pencil lines are transformed into ink lines and the vector data representing the ink lines only is sent to an output file.  If he choses, the operator may continue to create pencil and ink lines in the same manner until he as inked all lines he wants to save in the output file.  Thus the operator uses the template to create a new, restructured data set which can be used by a CAD system to create a new drawing devoid of unwanted lines, smudges and the like.

The operator may save the current status of the drawing, including ink, pencil, masked and template lines by selecting a "save drawing" command on the menu.  This stores the contents of the tile sturucture in a disk file in vector form. The operator may access the file later if he wishes to continue restructuring the data in it.  He may also save in a disk file only the current pencil structure by selecting a "save pencil structure" command from the menu. This allows the operator to separately store separate or overlapping portions of the orginal drawing.

The menu is displayed on the screen only when needed.  Referring to FIG. 2, tablet 40 has three areas, "constrained", "unconstrained", and "Menu". When the operator touches menu area 42 of tablet 40 with the stylus, the drawing displayed on the screen is dimmed and the menu is displayed on the screen along with a crosshair cursor centered on the menu at a point corresponding to the x,y coordinates of the stylus on the tablet. The menu consists of a number of boxes labeled with commands and cursor modes. To select a command or mode, the operator uses the stylus to move the crosshair over the selected menu item and then depresses the stylus to operate a switch therein. The menu item is highlighted to indicate the selection and any command selected is performed. If a cursor mode is selected then the cursor will remain in that mode until another mode is selected.

When the operator lifts the stylus from menu area 42, the selected menu item is dehighlighted, the menu disappears and the drawing is restored to full intensity. When he places the stylus on the constrained portion 44 of tables 40, the crosshair cursor appears on the screen in a location corresponding to the location of the stylus on the tablet. When he depresses the stylus in the constrained area, the crosshair cursor disappears and a small circular cursor symbol indicating the nibble cursor is active appears in the same location. When the operator places the stylus in the unconstrained graphics area 46 of the tablet, the menu disappears but the nibble cursor does not appear since the drawing is not displayed in the corresponding portion of the screen.

In the preferred embodiment, the cursor used to select lines is a "nibble" cursor meaning that an entire line or string of lines, from node-to-node will be penciled, erased or masked when any portion of that line is selected. Thus it is not necessary for the operator to move the cursor over the entire line to pencil, erase or mask it; thereby saving operator effort. Also in the preferred embodiment, the operator may select either of two cursor selection modes: single line or polyline. In the single line mode an entire line from node-to-node is selected if the cursor is pointed to any portion of it. In the polyline mode entire strings of lines interconnected by nodes are selected up to nodes having other than two connected lines.

In the preferred embodiment it is not necessary that the cursor touch the line being selected; it is only necessary that the cursor be in the vicinity of the line when the stylus switch is operated. The selection radius of the cursor may be adjusted to large or small by selection of the appropriate menu item. The nibble cursor appears on the screen as a circle of diameter sufficient to depict the selection radius and is illustrated at 48 in FIG. 2 for selecting line 70.

The tile structure used by the program listed in Appendix I is equivalent to a grid of memory locations, the grid being sized to match the size of the available memory. Each grid, or "tile" corresponds to a portion of the original drawing, and when the tile structure is loaded with drawing image data, each tile contains address pointers at x,y locations corresponding to nodes in the original drawing, a node being an isolated point or an end of a line. Where a line passes through a tile boundary, or grid line, a "pseudonode" is created and a pointer is stored to an address containing the location of all nodes in adjoining tiles connected to the pseudonode. Use of the tile structure helps to speed up search operations during the line selection process.

The operation of the data structuring program used in the preferred embodiment of the present invention is flow charted in FIGS. 3 to 34 and a description of the flow chart is included herebelow.

Before running the data structuring program the operator inserts a disk containing the vectorized drawing data from the autovectorizer into the terminal disk drive along with a file containing data defining the structure of the menu used in the data structuring program. To start the data structuring routine the operator types the file name of the data structuring program along with the file name of the file containing the vectorized drawing data and the name of the menu data file. A listing of the data structuring program, written in Pascal and assembly language, is included in Appendix I to this specification. The data structuring program is flowcharted in FIGS. 3 to 34.

Referring to FIG. 3 the data structuring program begins in block 100. In block 102 the InitializeVariables subroutine is called. Referring to FIG. 11 where the subroutine is flowcharted, the subroutine is entered in block 200 and program variables dependent on the terminal type are initialized in block 201. Next, in block 202, variables used to determine which combinations of surfaces are to be displayed are initialized and in block 204 variables used to draw to a surface are initialized. In block 206 variables used to change the cursor are initialized. Finally in block 208 variables used in saving the drawing to an output disk file are initialized. The subroutine ends in block 209 and program flow is returned to block 104 of FIG. 3.

In block 104 of FIG. 3 the terminal screen is cleared by calling the LLVISF subroutine. All subroutines or functions with names beginning with "LL" are library subroutines or functions, part of the Tektronix Local Programmability option of the 4115B terminal and are described in 4100 Series Low-Level Terminal Interface Manual, Tektronix part number 070-4534-00. In block 106 subroutine Parse-FileNames, flow charted in FIG. 12, is called to check to see if the data and menu file names are valid. Referring to FIG. 12, the subroutine is entered in block 210 and in block 211 the names are validated and extensions are added. If one or both of the file names is invalid, then a flag is set indicating the invalidity of the file names and an error message is written to the screen. In block 212 the subroutine ends and returns to block 108 of the main program module on FIG. 3. The file name error flag is tested in block 108. If one of the file names is invalid then the program is stopped in block 109. If both file names are correct then subroutine ProcessHeaderFile is called in block 110.

Referring to FIG. 13 flow charting the ProcessHeaderFile subroutine, the subroutine is entered in block 220 and then, in block 221, subroutine GetFileName is called to obtain the file name of the drawing data file as amended in block 211 of FIG. 12. In block 222 the data file is opened and in block 223 "header file" data, generated by the autovectorizer specifying size of the drawing scanned by the autovectorizer, is read. The subroutine ends in block 224 and program flow returns the the main program module block 112 in FIG. 3.

In block 112, the InitializeGraphics subroutine is called. Referring to FIG. 14, detailing the subroutine, the routine is entered at block 300 and then moves to block 302 where keys associated with the terminal which could be used to manipulate the viewing screen are locked by calling system subroutine LLVKLK to prevent the inadvertent use of these keys during execution of the data structuring program. Next, in block 304, the screen is cleared by calling the EraseSurface subroutine.

The Tektronix 4115B terminal may operate with different sizes of segmented screens. The portion of the screen actually available for displaying graphics information (the viewport) may also be specified. In the present application the screen and viewport are initialized so that the entire drawing will initially appear on the screen. Screen segmenting is not used. Therefore, in blocks 306 and 308 of FIG. 14, library subroutines LLDLVW and LLDLSG are called to delete the parameters specifying the current screen, view and segmenting. The parameters specifying the sizes of the viewport and screen are then initialized in block 310 to the maximum screen size available and the initial viewport is set to fit the drawing to the screen based on the drawing size information obtained from the header data by library subroutine LLVWPT called in block 312.

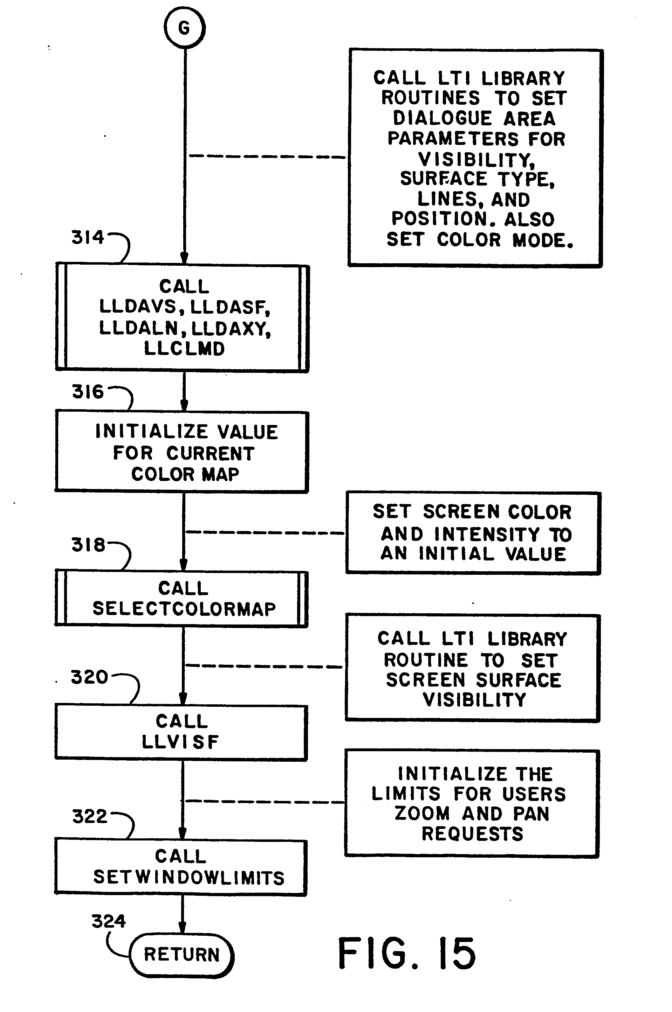

Then, following reference point G in FIG. 14 to point G in FIG. 15, library routines LLDAVS, LLDASF, LLDALN, LLDAXY and LLCLMD are called to initialize a number of parameters used to control the display attributes of the dialog surface including visibility, surface type, number of

16

0176833

lines, and color mode. In block 316, parameters specifying the color map used with the each surface for intensity and color value are initialized. In block 318 color maps for all surfaces are set and in block 320 library routine LLVISF is called to set the initial visiblity of all surfaces. Zoom and pan functions are available in the Tektronix graphics terminal and in block 322 the zoom and pan limits are set. However zoom and pan capability is not included in the preferred embodiment of the data structuring program disclosed herein but may be added thereto by one skilled in the art. Block 324 ends the InitializeGraphics subroutine and the data structuring program returns to the main module, block 114 of FIG. 3.

In block 114, a BuildMenu subroutine (seen in detail in FIG. 16) is called to create the menu on the menu surface. Referring to FIG. 16, the subroutine is entered in block 330 and then calls an InitializeMenu subroutine in block 331. The InitializeMenu subroutine obtains data contained in the menu file named by the operator when he called the data structuring program to initialize parameters used in creating the menu. Next, in block 332 a flag is set indicating that the menu surface is initially not visible on the screen. In block 334, a SelectMenuSurface subroutine is called to select the menu surface to be modified in block 335. Block 335 draws the menu on the surface using data from the menu file. With the menu drawn on the menu surface, but with the menu surface not yet displayed on the screen, the BuildMenu subroutine calls the SelectGraphicsSurfaces subroutine in block 336 to make the drawing surface available for later use and then ends in block 338 returning to block 116 of the main module seen in FIG. 3.

In block 116, an IssueStatusMessage subroutine is called to generate a message to the operator on the screen. This subroutine is entered in block 340 of FIG. 17. Next, in block 342 of FIG. 17, parameters specifying the screen coordinates where the message is to be displayed, the length of the message and the text of the message itself are passed to the subroutine from the main. In this case the message to be displayed is "Initializing Bank Switch Memory". In block 344 library subroutine LLGPRC is called to set the appropriate ("alpha") text writing mode and then in block 346 library subroutine LLVWAT is called to set the appropriate view attributes of the text to be written on the screen based on parameters initialized in block 314 of FIG. 15.

Next, in block 348, library subroutine LLMOVE uses the data passed in block 342 to locate a portion of the screen to display the message and the message is actually displayed using library subroutine LLTEXT called in block 350. After the message is written to the dialog area the view attributes used for subsequent screen writing operations are reset to the states occurring prior to block 346 by recalling the LLVWAT library subroutine in block 352. Finally, the writing location is moved to a default position on the screen by calling the LLMOVE subroutine in block 354. In block 356 the IssueStatusMessage ends and operation is returned to the calling point of the main module, in this case point A of FIG. 3.

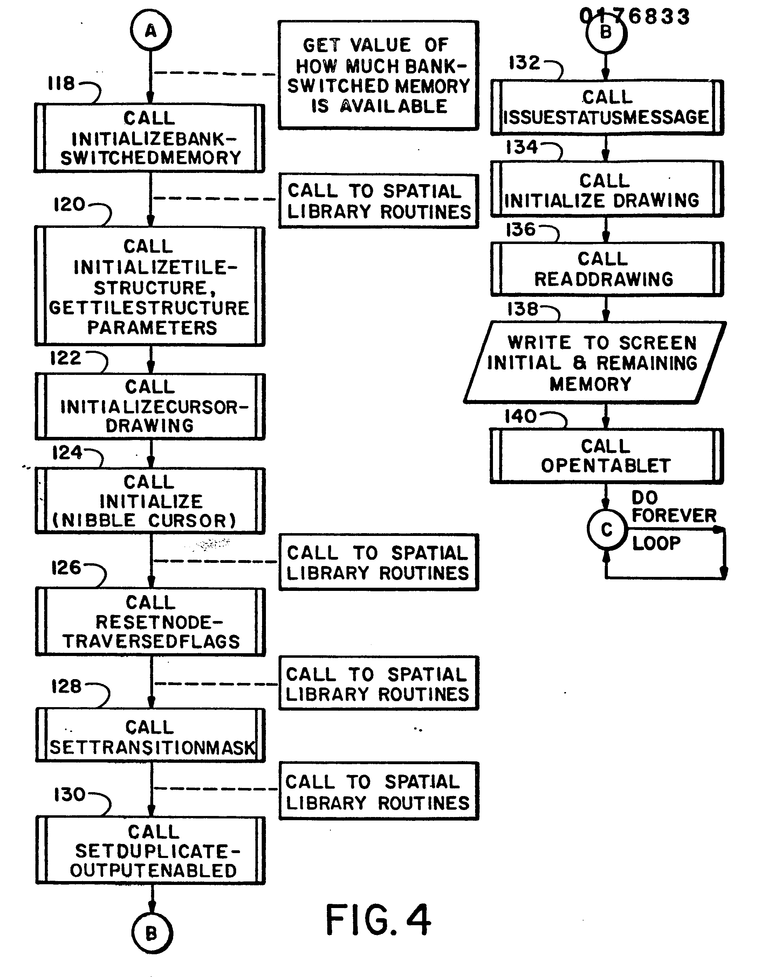

Point A of FIG. 3 leads the data structuring program to point A of FIG. 4 and then to block 118. In block 118, while the "Initializing Bank Switched Memory" message is displayed, the banked switched memory available in the terminal is linked and formatted by called subroutine InitializeBank-SwitchedMemory detailed in FIG. 18.  In the Tektronix 4115B Terminal random access memory is grouped into banks mounted on separate boards installed in ports along the terminal backplane. This subroutine formats all available memory for use by the data structuring program.  Entering the subroutine at block 360 and then moving to block 362, variables used to identify the particular bank, or port, being checked and for counting memory banks checked are zeroed.  Then to prevent interrupts when checking memory banks not installed, block 364 current interrupt and status flags are saved and cleared.

Starting with memory port 0, the port is checked in block 366 to see if a memory board is installed in the port.  If the memory board is installed a parameter containing a logical true is passed to block 368 which directs the subroutine to block 370 calling an InitializeOneBank subroutine to format the memory.  The subroutine then moves to block 372 from block 370, or directly from block 368 if no memory board was installed in the port. In block 372, the port counter is incremented.  If the memory port counter is less then the highest numbered port available then operation is redirected by block 374 to block 366 where the next port is checked.  When all ports have been checked and all memory banks have been formatted block 374 directs subroutine operation to block 376 where the total amount of memory is ascertained and stored in a register available to the main program module. The InitializeBankSwitchMemory subroutine ends at block 378 and is returned to block 120 of the main module seen in FIG. 4.

Referring to FIG. 4, block 120 calls the InitializeTileStructure and GetTileStructureParameters subroutines which adjust the tile structure in memory for storing drawing information. The number of tiles and the size of each tile is adjusted to suit the amount of memory available. Next, in block 122 an InitializeCursorDrawing subroutine is called. This subroutine, detailed in FIG. 19, is entered in block 380. In block 382 the cursor surface is made invisible and the curser is initialized to the pencil mode. In blocks 384 and 386 the x,y coordinates of all tile block corners and the length ("radius") of each tile block side is set. The subroutine ends in block 388 and returns to block 124 of the main program module in FIG. 4.

Block 124 calls the InitializeNibbleCursor subroutine of FIG. 20. In FIG. 20 several variables associated with the nibble cursor are initialized. A CursorStatus variable is initialized to "limbo" (described later) and a SaveOpen variable is initialized to "true" indicating that only one cursor at a time is being used. A PixelContactRadius variable, controlling the radius of the nibble cursor, is set to five pixels and the polyline mode is turned off so that the nibble cursor will be initially in the line mode. The subroutine ends in block 394 returning to block 126 of the main module, FIG. 4.

Next, in blocks 126, 128 and 130, ResetNodeTraversedFlags, SetTransitionMask, and SetDuplicateOutputEnabled subroutines are called to initialize parameters and flags later used in converting the drawing data into the spatial structure. The program flow then moves to block 132 where the IssueStatusMessage subroutine of FIG. 17 (previously described) is called to display a "Reading Drawing" message on the screen. With the message displayed, an InitializeDrawing subroutine is called in block 134. Referring to FIG. 21 charting the called subroutine, after entry at point 400, the routine initializes the x,y coordinates for the lower left and upper right corners of the drawing in blocks 402 and 404 and then sets a FirstNodeInDrawing flag to logical true in block 406. In blocks 408, 410 and 412 three error flags, used to indicate errors encountered while attempting to write the data in the drawing file into the tile structure, are reset indicating that no such errors have yet occurred. The errors which may be subsequently flagged are errors associated with "failed attempt to connect a node" (block 408), "failed attempt to create a node" (block 410), and "out of memory" (block 412).

Next, in block 414 of FIG. 21, a "new connection" variable is set to "template" and in block 418 a "previous node" variable and a "current node" variable are initialized to zero. The purposes of these variables are explained below. Finally a "SelectGraphicsSurface" subroutine is called in block 418 which selects the drawing surface for subsequent modification. The InitializeDrawing subroutine then ends in block 420 returning to block 136 of the main program module on FIG. 4.

In block 136 of FIG. 4 a ReadDrawing subroutine, detailed in FIG. 22, is called to read the drawing data from the file and, using this data, to load drawing information into the tile structure in a spatial format. At the same time, the image of the drawing is written to the drawing surface and displayed on the screen. The drawing data file is a series of data lines consisting of a draw-flag and an x,y coordinate or a draw-flag and a code indicating a line type (pencil, template, ink or mask). The draw-flags will be either an "L", a "P", an "M" or a "D". It is convenient to think of the draw-flags as directions to a plotter for drawing lines because the drawing structure is written into the tiles in much the same fashion. An "M" draw-flag indicates that the plotter pen is lifted and "M"oved to the point indicated by the x,y coordinate data on the data file line containing the "M" flag. A "D" draw-flag indicates that the "plotter pen" remains "D"own while moving to the indicated x,y coordinate from the last x,y coordinate. A "P" draw-flag indicates that the next x,y coordinate is an isolated "P"oint so that the plotter pen is moved to the indicated point and momentarily dropped to create a dot. The data following an "L" draw-flag indicates the type of "L"ine that all subsequent lines are to be designated (pencil, template, ink or mask). When the first line of the data file does not contain an "L" type draw-flag, the program assumes all lines to be drawn are template lines until an "L" draw-flag line occurs.

In FIG. 22, the ReadDrawing subroutine is entered at block 500 and then in block 502 the name of the drawing file and the scanner and drawing limits contained in the drawing file header are obtained. In block 504 the IssueStatusMessage subroutine is called to display a "Reading Drawing" message on the screen while the ReadDrawing subroutine is in operation.  Block 506 then checks for flags indicating end of data file or out of memory conditions.  If no such flags are set then block 514 checks for flags indicating a failure to create a connection or a new node. Initially, however, before any data lines are read, these flags are all reset.  Thus, prior to the reading of the first line in the drawing file, block 514 directs program flow to block 516 of FIG. 22 where the first line in the drawing file is read.  Normally the first line will contain an L or an M draw-flag.  If it contains an L flag, block 518 directs program flow to block 520 where a SetAppropriateTransitionMask subroutine is called to cause all subsequent connections to be labeled as pencil, ink, template or masked template lines (or a combination thereof) as determined by the data following the L flag.  When a file is initially received from the autovectorizer all lines are template lines.  However, as seen below, restructured drawing files created by the data structuring program containing pencil, ink and masked template lines along with unmasked template lines may be recalled and further restructured.

If the first data line contains an M flag, then blocks 518, 512 and 524 (of FIG. 23) direct program flow to point M and then to block 530 of FIG. 23.  In block 530 a MoveToPoint subroutine is called causing a new node to be written into the tile structure at the indicated x,y coordinates. If the coordinates are out of range or if there is insufficient memory to store the new node, a "failure to create a node" or an "out of memory" flag is returned.  If no such error occurs then the coordinates or the current node are saved as the coordinates of the previous node in block 534 and program flow returns to point Z of FIG. 22. However if such an error occurs, the current node information is not saved and program flow returns directly to point Z from block 532.

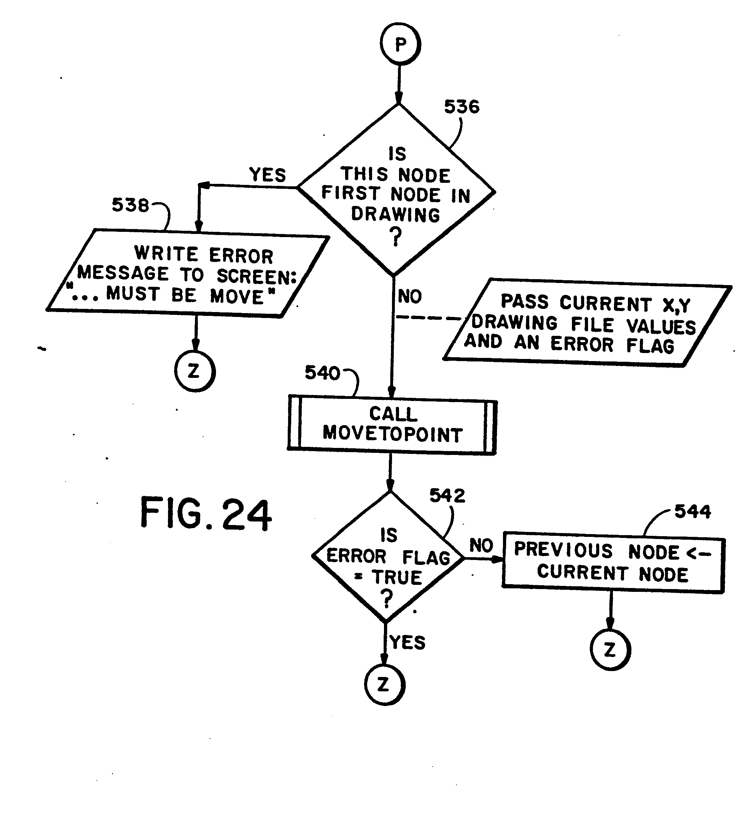

Assuming that the out of memory and end of file flags have not been set and that no failure to create a connection or failure to create a new node flags have been set, blocks 506 and 514 again direct program flow to block 516 where a new data line is read. If the new line contains a "P" flag, the program flow is directed through blocks 518 and 522 to point P FIG. 24. Then in block 536 of FIG. 24, the FirstNodeInDrawing flag is tested. If true an error message "...must be Move" is written to screen in block 538 and program flow is directed back to point Z of FIG. 22. If the current data line does not contain the first node read then the flag will be false and block 536 will direct program flow to block 540 where the MoveToPoint subroutine is called to enter the node into the tile structure without a connection to the previous node. Again in block 542 any error flags generated by the MoveToPoint subroutine are tested and if errors have occured program flow is directed back to point Z of FIG. 22 without saving the current node data. In the absence of an out of memory or a failure to create a node error, block 542 routes program flow through block 544 to save the current node as the previous node.

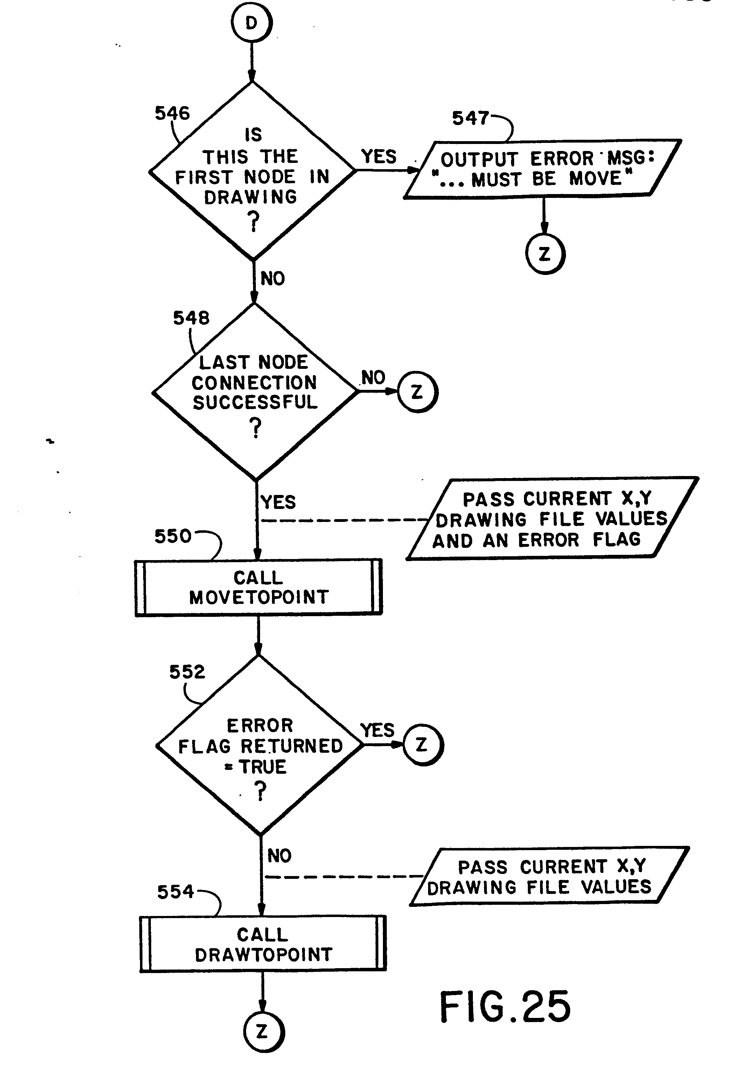

Referring back to FIG. 22 and assuming again that the out of memory and end of file flags have not been set and that no failure to create a connection or failure to create a new node flags have been set, blocks 506 and 514 again direct program flow to block 516 where another data line is read. If the new line contains a "P" flag, the program flow is directed through blocks 518 and 522 to point 2 of FIG. 23 and then through blocks 524 and 526 to point D of FIG. 25. Then in block 546 of FIG. 25, the FirstNodeInDrawing flag is tested. If true an error message "...must be Move" is written to screen and program flow is directed to point Z of FIG. 22. If the current data line does not contain the first node read then the flag will be false and block 536 will direct program flow to block 540 where the MoveToPoint subroutine is called to enter the node into the tile structure without a connection to the previous node. Again in block 542 any error flags generated by the MoveToPoint subroutine are tested and if errors have occurred program flow is directed back to point Z of FIG. 22 without saving the current node data. In the absence of an out of memory or a failure to create a node error, block 542 routes program flow through block 544 to save the current node as the previous node.

With the drawing written into memory and appearing on screen, the amount of memory available before storing the drawing data and the amount of available memory remaining after storing the drawing data are displayed in the dialog area of the screen in block 138.

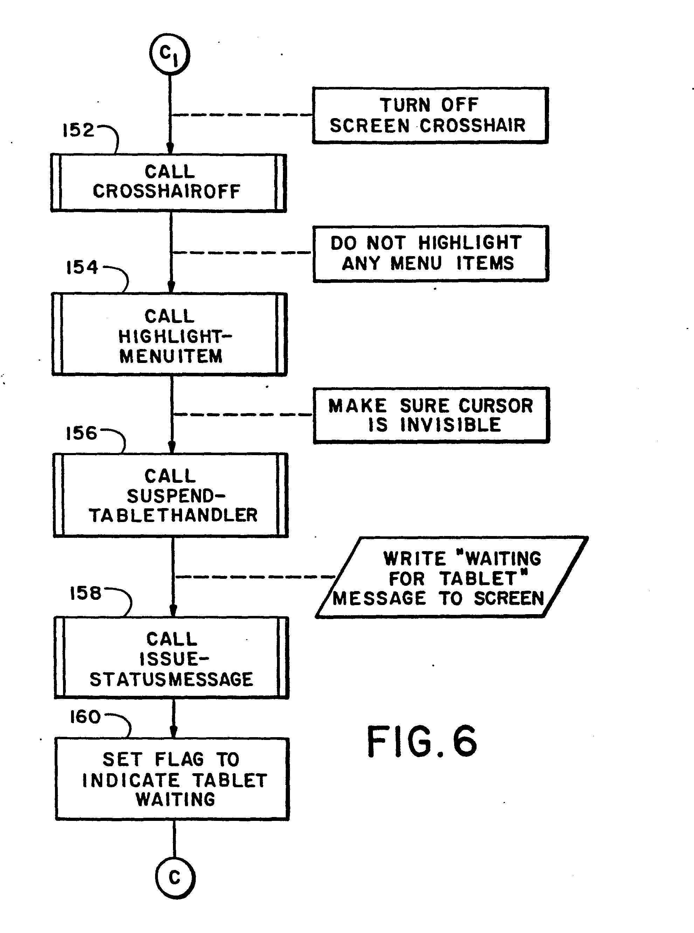

The tablet input device is then enabled in block 140 by calling subroutine OpenTablet. Turning now to FIG. 26, the OpenTablet routine begins in block 600. Then in block 602 the contents of a number of registers currently in use are saved in memory along with the present interrupt status. All interrupts are disabled. In block 604 subroutine Init is called to initialize the drivers for the tablet and the terminal port connecting the tablet and to synchronize the tablet with the data structuring program. The interrupts are enabled in block 610 and the registers saved in block 602 are reloaded in block 612. The subroutine ends in block 614 and program flow is returned to point C of the main program module shown in both FIGS. 4 and 5.

With the drawing data loaded into the tile structure and the drawing displayed on the screen and with the graphics input tablet enabled and synchronized with the data structuring program, the operator may begin editing the drawing by manipulating the stylus on the tablet to control the movements of cursors on the screen. However, any time the operator wishes to exit from the data structuring program he may type a Control C on the terminal keyboard. In block 142 program flow is then directed to block 144 where an Exit subroutine is called to return terminal operation to the CP/M operating system, the data structuring program thereby ending as indicated in block 146.

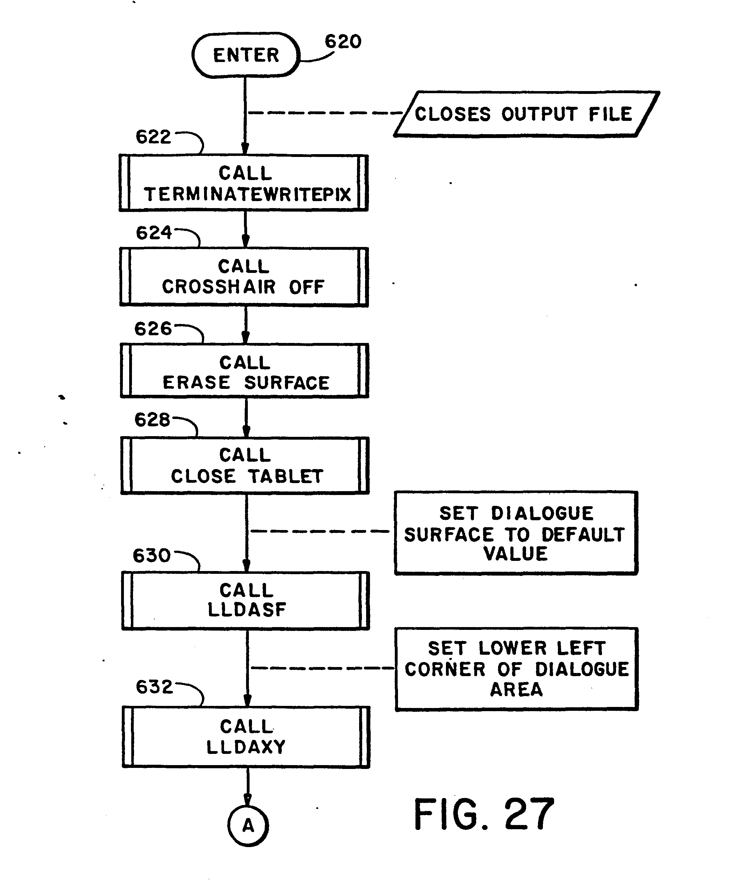

The Exit subroutine is flowcharted in FIGS. 27 and 28. After subroutine entry in block 620, the output file is closed in block 622 by calling a TerminateWritePix subroutine. The crosshair is then turned off if it was on in block 624 by calling a Crosshair Off routine and the cursor surface is erased in block 626 by calling an Erase-Surface subroutine. The tablet is disabled in block 628 by calling a CloseTablet subroutine which restores interrupt vectors taken by the Open-Tablet subroutine. The dialog area is restored and repositioned in blocks 630 and 632 by calling library subroutines LLDASF and LLDAXY and, in FIG. 28 the dialog area is dimensioned and made visible by calling library routines LLDALN and LLDAVS in blocks 634 and 636. The color and intensity of the screen are set in block 638 by calling the Select-ColorMap subroutine and the drawing and menu surfaces are also made visible if not already so in block 640 by calling library subroutine LLVISF. Terminal operation is then returned to CP/M level in block 642.

Returning now to the main program module in FIG. 5, assuming the operator does not want to exit the program by typing Control-C at the terminal, block 142 directs program flow to block 148 where a GetGin subroutine is called. The GetGin subroutine determines the position and state of the stylus on the tablet and returns the information to the calling routine. GetGin is flowcharted in FIG. 29. Referring to FIG. 29, the GetGin subroutine begins in block 700 and in block 702 saves the contents of any registers in use by the calling routine along with a pointer to the storage location of the current stylus data. Then in block 704 errors associated with message transmission from the tablet are checked including overrun (data arriving too quickly for the interrupt handling routines to keep up), framing (incorrect baud rate), and parity (garbled transmission) errors. If any of these errors are present, then program flow is directed to point A of FIG. 30 leading to block 726 where procedures to store any incoming interrupt flags for the duration of the subroutine are enabled, interrupts are disabled, the appropriate error status flag is reset and a buffer pointer is established. Then in block 728 the Init subroutine is called to reinitialize the port and tablet thereby sychronizing tablet operation with the program. Operation of the GetGin subroutine is then terminated without a return and program flow is redirected to point C of FIG. 5.

Turning again to the GetGin subroutine of FIG. 29, if there are no overrun, framing or parity errors detected in block 704, preparations are made to save interrupt flags occurring during the subroutine in block 706 and interrupts are disabled in block 707. Synchronization between tablet and the program is checked in block 708 with subroutine flow redirected to point A of FIG. 30 for tablet reinitialization as described above if the tablet and the program are not synchronized.

If the tablet and program are synchronized, then block 708 of FIG. 29 directs program flow to block 710 were the proximity of the stylus to the tablet is checked. A stylus condition indicator returned from the tablet with the x,y coordinates of the stylus represents any of three values: "out of proximity," if the stylus is not on the tablet, "in proximity," if the stylus is on the tablet but a select switch on the end of the stylus is not activated, or "depressed" if the stylus is on the on the tablet and the stylus switch is activated. If the stylus is not on the tablet then in block 712 a "z" parameter is set to indicate the "not in proximity" condition, the caller's registers are restored and, in block 714, the GetGin subroutine is ended and program flow is returned to block 150 of FIG. 5. On the other hand, if the stylus is on the tablet, block 710 directs program flow to block 716 where subroutine Compact3 is called to convert to Pascal format data transmitted from the tablet to the terminal indicating the x,y stylus position on the tablet.

The converted x,y coordinates of the stylus are stored in memory in block 718. Then block 720 checks for operation of any keys on the terminal. Since the operator is supposed to use only the tablet for input at this point, an error is signaled in block 722 using a tone generator in the terminal if any keys are depressed and the subroutine is terminated in block 724 by returning program flow to the calling routine. Assuming no terminal keys are depressed, block 720 directs program flow to point B of FIG. 29 leading to block 712 where the z parameter indicating either the depressed or the in proximity condition is stored and the caller's registers are reloaded with data stored in block 702. The subroutine then ends in block 714 and program operation is returned to the calling routine, in this case to block 150 of FIG. 5.

Referring again to FIG. 5, in block 150 the condition of the stylus is determined by checking the value of the z parameter returned from the GetGin subroutine called in block 148. If the z parameter indicates the out of proximity position, then the stylus is not on the tablet and program flow is directed to point C1 on FIGS. 5 and 6. Then in block 152 of FIG. 6 a CrossHairOff subroutine is called to remove the crosshair from the screen, if it is presently on.

The CrossHairOff subroutine is flowcharted in FIG. 31. After subroutine entry in block 740, the cursor surface is selected to receive graphics input by calling the SelectCursorSurface subroutine in block 742. The operation to be performed on the cursor surface is selected to be an erase in block 744 by calling a SetLineIndex subroutine.    The x and y crosshairs of the crosshair cursor are then erased from the cursor surface in blocks 746 and 748 by calling subroutines PixelMoveClipped and PixelDrawClipped.  The crosshair then disappears from the screen.  The drawing surface is reselected for graphics input in block 750 and then in block 752 the subroutine ends, returning program flow to block 154 of FIG. 6.

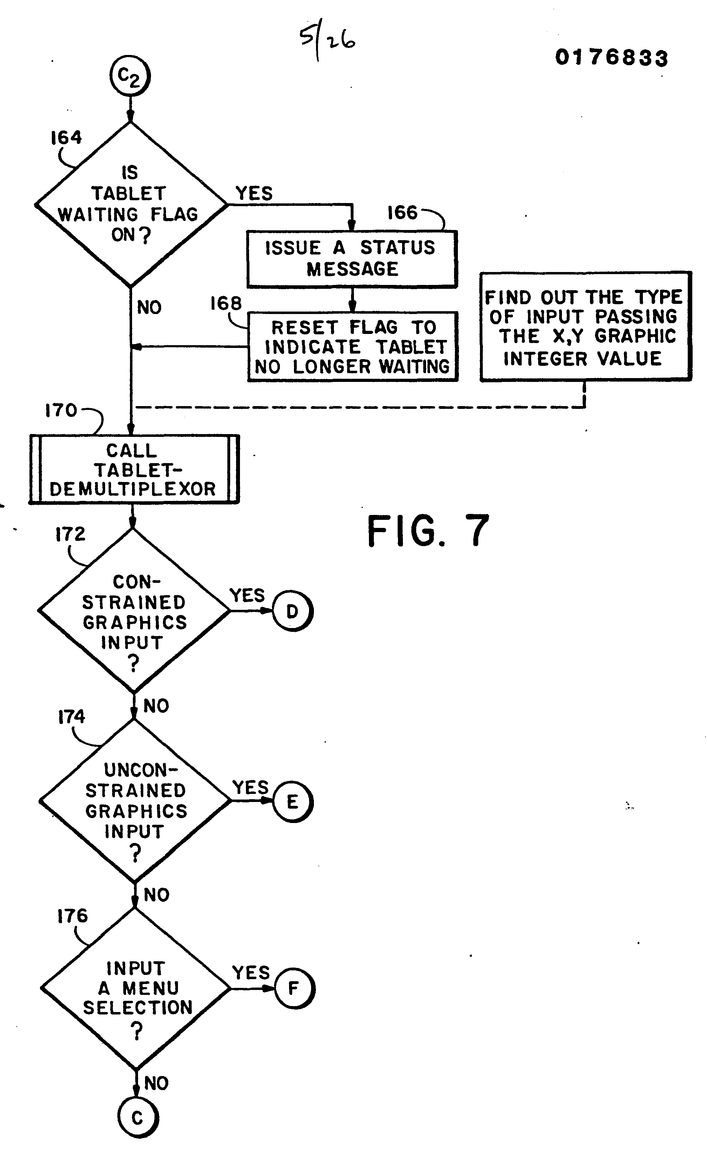

Whenever the operator removes the stylus after selecting a menu item the highlighted menu item is dimmed by calling a HighlightMenuItem subroutine in block 154 of FIG. 6.  Also if the nibble cursor is present on the screen, the cursor is erased by calling a SuspendTabletHandle subroutine in block 156.   Then the IssueStatusMessage subroutine is called in block 158 to generate a "Waiting for Tablet" message on the screen dialog area and a "tablet waiting" flag is set to "true" in block 160.  Program flow is then redirected to point C of Fig. 5.  The program will continue to cycle through the C/C1 loop on FIGS. 5 and 6 until the operator places the stylus on the tablet.  At that point the z parameter returned by the GetGin subroutine of block 148 will be in either the proximate/on or proximate/off condition and block 150 of FIG. 5 will direct program flow to point C2 of FIG. 7 and then to block 162 where the TabletMessageVisible subroutine is called to remove the "tablet waiting" message from the screen.

Next, in block 164, the tablet waiting flag is checked and if in the off condition program flow is directed to block 170.  On the other hand, if the tablet waiting flag is in the on condition program flow is directed to block 166 where the "tablet waiting" message is removed from the screen and the tablet waiting flag is reset to off in block 168. Program flow is then also directed to block 170.

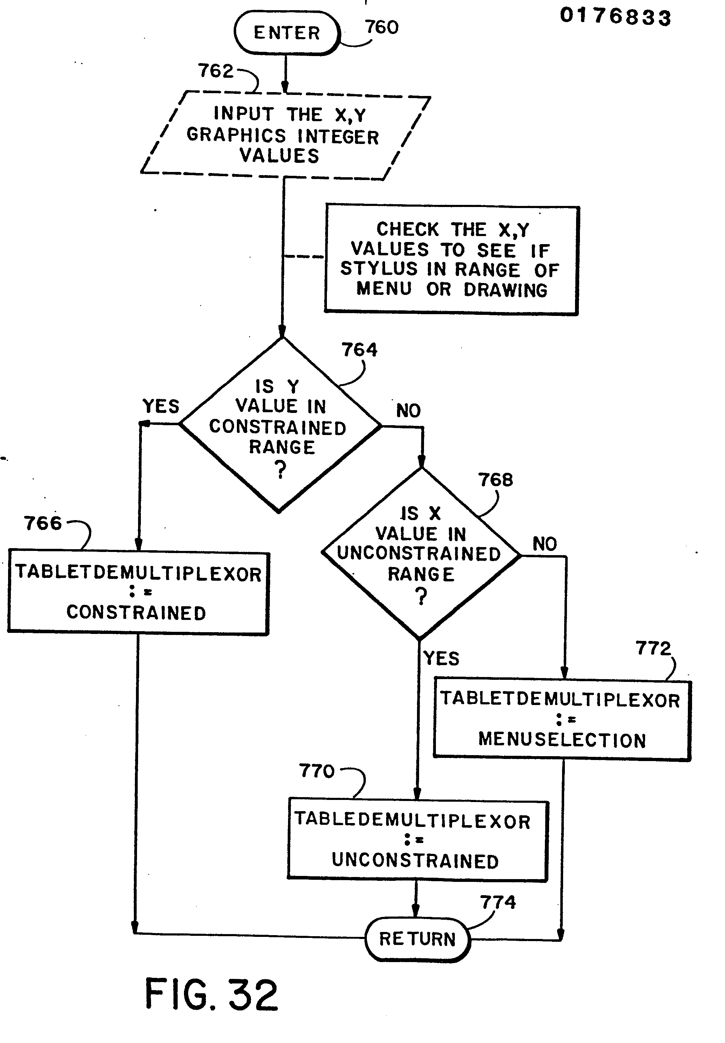

In block 170 a TabletDemultiplexer subroutine is called to check the position of the stylus on the tablet and return a TabletDemultiplexer parameter indicating the stylus position. Referring to FIG. 32 where the TabletDemultiplexer subroutine is flowcharted, the routine is entered at block 760 and receives the x,y coordinates of the cursor in block 762. Next, in block 764, the x,y coordinates are checked to see if they lie in the constrained range. If so, the TabletDemultiplexer parameter is set to "constrained" in block 766 and the subroutine is ended and returned to the caller in block 774. Alternately, if the x,y coordinates of the stylus lie in the unconstrained range, block 764 directs program flow to block 768 which in turn directs flow to block 770 where the TabletDemultiplexer parameter is set to "unconstrained" before the subroutine is ended in block 774. Finally, if the x,y coordinates of the stylus lie in the menu area, then blocks 764 and 768 direct program flow to block 772 where the TabletDemultiplexer parameter is set to "MenuSelection". Thereafter the subroutine is ended in block 774 and program flow is returned to block 170 of FIG. 7.

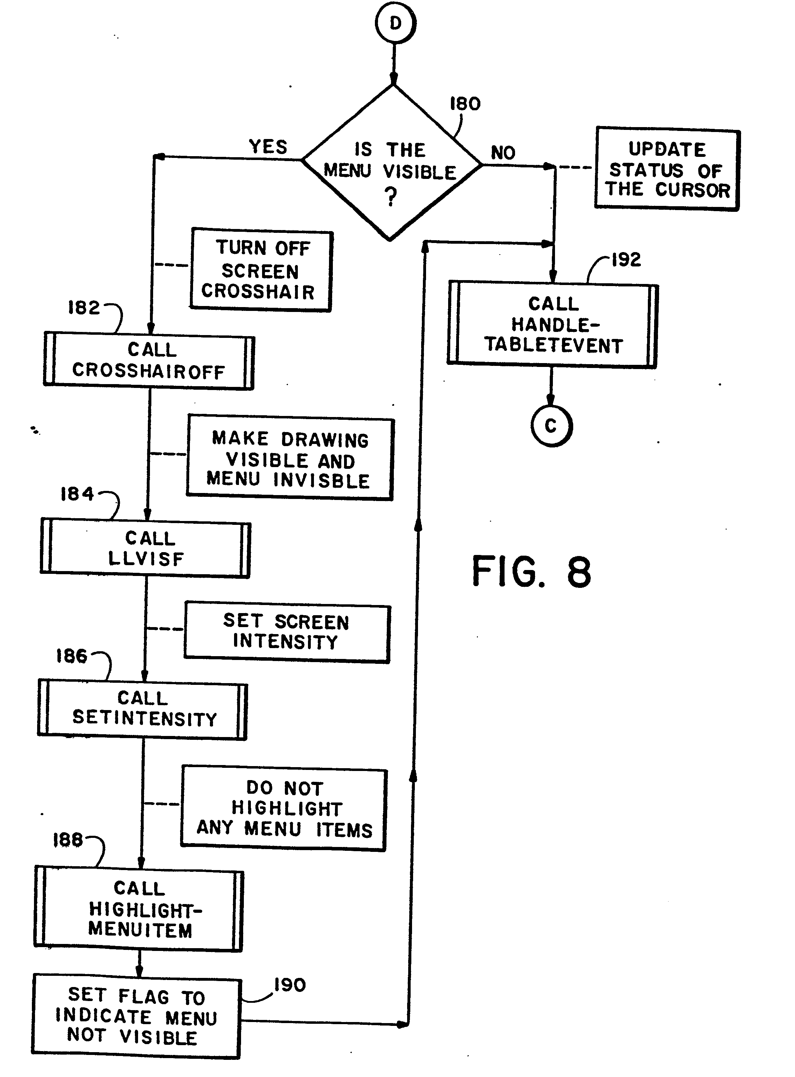

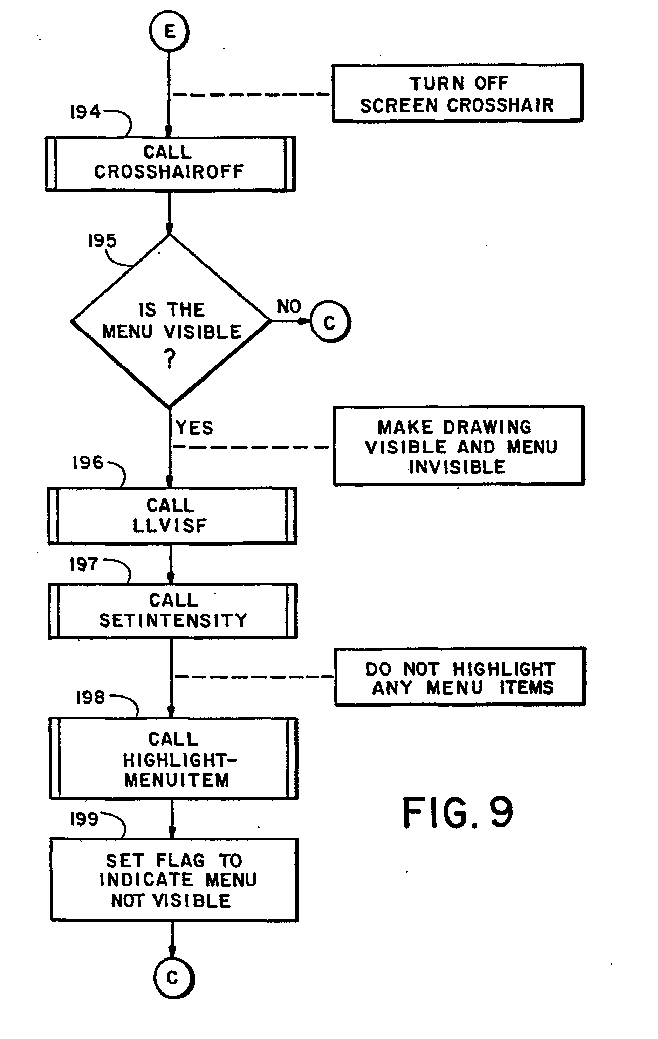

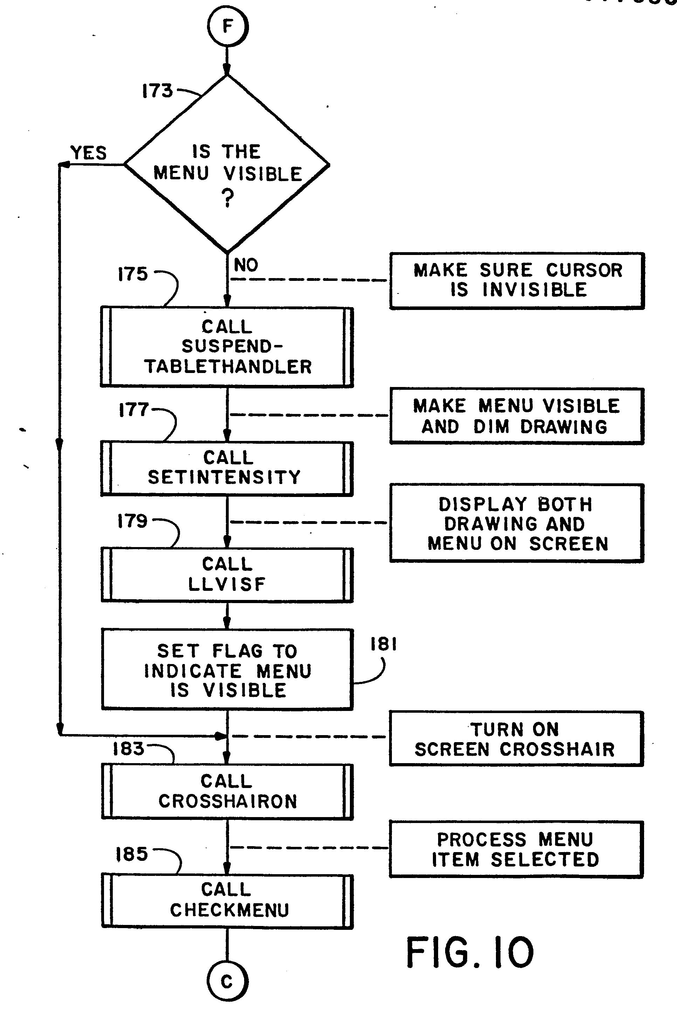

In FIG. 7 blocks 172, 173 and 174 direct program flow according to the state of the Tablet-Demultiplexer parameter and therefore according to the area of the tablet the operator has selected with the stylus. If he has selected the constrained graphics area then block 172 will direct program flow to point D of FIG. 8 to call

subroutines allowing the operator to use a cursor to make changes to the drawing. If the operator has selected the unconstrained graphics area then blocks 172 and 174 will direct program flow to point E of FIG. 9 to call subroutines to remove the menu from view if it is visible and undim the drawing if it has been dimmed. Finally, if the operator has selected the menu area, then Tablet-Demultiplexer parameter will be in the "menu" state and blocks 172, 174 and 176 will direct program flow to point F of FIG. 10 to display the menu on the screen.

Assuming now that the operator has selected the menu area with his stylus and referring to FIG. 10, a MenuVisible flag is checked to determine if the menu is on in block 173 and if the menu is on program flow is directed to block 183 to turn the crosshair on. However if the menu is not on block 173 directs program flow to block 175 where the SuspendTabletHandler subroutine is called to make the nibble cursor invisible if it is currently visible. Then in block 177 the menu and drawing surface intensities are set by the SetIntensity subroutine, with the drawing surface being dimmed and the LLVISF library subroutine in block 179 displays the menu surface and the dimmed drawing surface on the screen. The MenuVisible flag is set in block 181 and then in block 183 the crosshair is turned on by calling a CrosshairOn subroutine. The crosshair appears on the screen in the x,y location corresponding to the x,y location of the stylus on the tablet. At this point the CheckMenu subroutine of FIG. 34 is called to enable the operator to select a menu item.

Referring to FIG. 34, the CheckMenu subroutine begins in block 900 and then in block 902 obtains the x,y and z parameter values. If the crosshair is not on a menu item then block 904 directs action to block 906 where the HighlightMenuItem subroutine is called to dim any highlighted menu item, the subroutine then ending in lock 936. If a menu item was selected, then block 904 directs program flow to block 908 where a PickMenuItem subroutine is called to determine the number of the menu item selected and to return that number as a "menu item" variable. Program flow is then directed by blocks 910, 914, 918, 922, 926 and 930 depending on the menu item number selected by the operator.

If menu item 1 was chosen, labled "Exit" on the screen, then block 910 directs program flow to block 912 where the Exit subroutine described earlier is called to end program operation and return to CP/M operating system.

If menu item number 2, labeled "Save Drawing" on the screen, is selected then block 914 directs operation to block 916 where a SaveDrawing subroutine is called which stores the present state of the drawing data representing all template, ink, pencil and masked template lines in a disk file. This file may later be recalled and restructured if desired. The subroutine then ends in block 936.

If the operator has selected menu item number 3, "Save Pencil", then block 918 directs program flow to block 920. A SaveSelectedStructure subroutine is called which saves only the current pencil structure in a disk file for later use. This feature permits the operator to save a selected portion of the drawing for later restructuring. The subroutine then ends in block 936.

If the operator has selected menu items 15, 17 or 13, shown on the screen as "Unmask All", "Erase All Pencil", and "Ink All Pencil", respectively, then subroutine TransferStructure is called in block 924 to perform the indicated operation. If "Unmask All" is selected, then all masked template lines are unmasked and displayed on the screen. If "Erase All Pencil" is selected the pencil structure is deleted although any corresponding template lines remain. If the "Ink All Pencil" operation is selected, all lines and points in the pencil structure are converted to ink lines and the data corresponding to the inked structure is stored in an output disk file for later use by a CAD system. After performing the indicated operation the CheckMenu subroutine in ended in block 936.

When a menu item 34, 35 or 36 is chosen the cursor operation is selected as either "Mask Template", "Erase", or "Pencil". Block 926 diverts program flow to block 928 where subroutine Set-TransitionMask is called to set the cursor mode. Thereafter lines and nodes selected by the nibble cursor will either be masked, erased or penciled in depending on the mode selected.

When menu items 69, "Select Small Radius", 70, "Select Large Radius", 71, "Set Line Mode" or 72 "Set Polyline Mode" are selected block 930 directs program flow to block 932 to call a Secondary-Handler subroutine to change the selection characteristics of the cursor. If item 69 is selected the maximum distance the cursor must be from a line in order to select the line (the cursor radius) is set to a small, predetermined distance. If menu item 70 was selected, then the cursor radius is set to a larger, predetermined value. If item 71 is chosen, the cursor is placed in the single line

mode so that lines must be selected by the cursor one line at a time. Finally, if menu item 72 is selected the cursor is placed in the polyline mode so that all lines connected in a node-to-node string up to all nodes having other than two connected lines if the nibble cursor is pointed to any one line in the string.

If the operator points the cursor to a location in the menu area not containing a selection item then block 930 directs program flow to block 934 to call subroutine RingBell to generate a tone indicating an incorrect cursor position. Thereafter, and after all selected menu operations have been executed, the CheckMenu subroutine is terminated at block 936 and returned to the main program module at point C, FIG. 5.

Returning now to FIG. 7 and assuming that the operator has placed the crosshair in the unconstrained graphics area in the lower right corner of the screen, block 174 directs program operation to point E of FIG. 9 leading to block 194. In block 194 the cross hair is turned off, if it was on, by calling subroutine CrosshairOff. Then in block 195 the menu visible flag is checked. If the menu is not visible then program flow is returned to point C of FIG. 5. If the menu is visible, then the menu is turned off before returning to point C of FIG. 5. Block 195 directs the program to block 196 were the LLVISF library subroutine is called to make the menu invisible and make the drawing visible. The intensity of the drawing is increased by calling the SetIntensity subroutine in block 197 and the HighlightMenuItem subroutine in block 198 to dehighlight any highlighted menu item. Then in block 199 the menu visible flag is set to indicate that the menu is not visible. Program operation then returns to point C of FIG. 5.

Again returning to FIG. 7, if the operator moves the cursor to the constrained graphics area in the upper portion of the screen block 172 directs program flow to point D of FIG. 8 and then to block 180. In block 180 the menu visible flag is checked. If the menu is visible, block 180 diverts program flow to block 182 where the CrosshairOff subroutine is called to turn off the crosshair, to block 184 where the LLVISF library routine makes the menu invisible and the drawing visible, to block 186 where the SetIntensity subroutine is called to increase the drawing intensity, to block 188 where the HighlightMenuItem subroutine is called to dehighlight any highlighted menu item and to block 190 where the menu visible flag is set to indicate menu not visible. Once the menu is not visible then program flow is directed either from block 180 or block 190 to block 192 where a HandleTabletEvent subroutine is called.

The HandleTabletEvent subroutine is flowcharted in FIG. 33. Entered in block 800 the subroutine calls a DrawCursor subroutine in block 802 which draws the circular nibble cursor on the cursor surface in the location on the screen corresponding to the position of the stylus on the tablet. The pixel x,y coordinates of the cursor are then converted to drawing x,y coordinates in block 804. Next, in block 806 subroutine SingleCursorAction is called to analyze the current and previous z parameter value, indicating the current and previous condition of the stylus, and to set a SingleCursorAction variable to indicate the next appropriate action. If the condition of the stylus is not depressed and has not changed since the last time the HandleTabletEvent subroutine was called, block 808 directs program flow to block 810 where the CrosshairOn subroutine is called to turn on the crosshair and then the HandleTabletEvent subroutine is terminated in block 824.

If, however, the stylus has been depressed since the last time the HandleTabletEvent routine was called, block 812 directs program flow to point A of FIG. 33 where operations affecting the status of lines selected by the cursor begin to occur. In block 826 a ResetNodeTraversedFlags subroutine resets all "node traversed" flags which have been previously set. Each node in the drawing has an associated "node traversed" flag which is set during any operation modifying data in the data structure. Next, in block 828, subroutine CrosshairOff is called to turn off the crosshair and in block 830 the contact radius parameter of the nibble cursor is converted to drawing units from pixel units by calling the PixelToDrawingSize function. In block 832 the nibble cursor is placed in the erase, pencil or mask mode and in the polyline or single line modes as previously selected by the operator using the menu. Finally in block 834 the line or lines selected by the nibble cursor are erased, penciled or masked according to the selected cursor mode and the HandleTabletEvent subroutine ends in block 824.

Returning to block 812, if the operator has kept the nibble cursor switch on but has moved the position of the cursor, then blocks 812 and 814 direct program mode to block 816 where the UpdateNibbleCursor subroutine is called so that any new lines selected by the cursor are erased, penciled or masked according to the current cursor mode.

If the operator then raises the stylus enough to turn off the stylus switch but does not remove the stylus from the tablet, then block 818 directs program flow to block 820 calling the CrosshairOn routine, to turn the crosshair on, and to block 822 to set the CursorStatus parameter to "limbo". The HandleTabletEvent then ends in block 824 and program flow returns to the main program module at point C of FIG. 5.

This completes the description of FIGS. 3 - 34. It should be noted that other cursor selection modes may be included acording to alternative embodiments of the present invention and incorporated into the program of Appendix I by any programmer skilled in the art. These would include, for instance, "block" selection using the cursor to describe an area, all lines intersecting the area, "gobble" selection where all interconnected lines are selected, using the cursor to select a portion of any one line, "polygon" selection, where all lines forming the closest polygon surrounding the cursor are selected. Also, in alternate embodiments, a text cursor may format areas to receive text entered on keyboard 60. In this way vectorized text may be erased and replaced with better formatted text. These alternative cursor selection methods may be used with the present invention, however only the "nibble" cursor is included in the preferred embodiment particularly by way of example. Finally, in alternative embodiments, an "entry mode" cursor may allow the operator to enter new template, pencil or ink lines not existing in the original drawing.

Thus while a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.


APPENDIX I
[Program listing accompanying the instant
application to be inserted here.]

## Claims

1. A method of creating a structured image data set based on acquired image data, comprising the steps of:

creating a template based on the acquired image data and displaying this template on a computer controlled screen,

selecting portions of the template to be used for the construction of a new drawing superimposed on the display template, and

saving the new drawing as a structured image data set.

2. A method of creating a structured image data set based on acquired image data, comprising the steps of:

creating on a computer controlled display screen a template based on the acquired image data, and

selecting portions of the acquired image data to be included in the structured data set by selecting portions of the template by means of a moveable selection means also displayed on the screen.

3. The method as in claim 1 wherein a template portion is selected by placing the selection means within a selectable distance from the template portion.

4. The method as in claim 3 wherein the selection means includes a graphics input device.

5. The method as in claim 3 wherein a user controls the selection means position on the screen by means of a tablet and stylus, the tablet sensing the position of the stylus on the tablet and transmitting data representing the position to the computer.

6.   The method as in claim 3 wherein the template comprises lines and nodes.

7. The method as in claim 6 wherein a plurality of template lines interconnected by nodes is selected by the selection means by placing the selection means within a selectable distance from any of the plurality of lines.

8.   The method as in claim 6 wherein a polygon of template lines is selected by a selection means placed within an area most nearly bounded by the polygon.

9.   The method as in claim 6 wherein the selected template lines are displayed on the screen with an attribute different from displayed unselected template lines.

10.   The method as in claim 9 wherein the selected template lines are displayed on the screen in a color different from that of unselected template lines.

11.   A method of creating a structured data set based on acquired image data, comprising the steps of:
        displaying on a computer controlled display screen a template image comprising template lines and nodes corresponding to the acquired image data,
        selecting portions of the acquired image data to be designated for inclusion in a structured image data set by using a moveable selection means also displayed on the screen to select the corresponding template lines displayed on the screen, and

removing as desired the inclusion designations from portions of the acquired image data from the acquired data set by using the cursor to select the corresponding lines and nodes on the screen,

copying all remaining designated data into the structured image data set exclusive of undesignated data, and

repeating any or all of the previous three steps until all desired portions of the acquired image data are included in the restructured image data set.

12. Apparatus for restructuring acquired image data, comprising:

a computer controlled display screen, means to display a template comprising template lines and nodes corresponding to the acquired image data,

means to control a moveable selection means on the screen,

means to select portions of the acquired image data to be temporarily designated for inclusion in a restructured image data set by moving the selection means to the vicinity of corresponding template lines and nodes displayed on the screen,

means to remove as desired the temporary designations from selected portions of the acquired image data by moving the cursor to the vicinity of the corresponding lines and nodes on the screen, and

means to copy all temporarily designated image data into the restructured data set exclusive of undesignated data.

1/26

0176833

FIG. 1

FIG. 2

0176833

START (100)

INITIALIZE VARIABLES IN ALL MODULES

102 — CALL INITIALIZE-VARIABLES

MAKE SURFACES INVISIBLE DURING INITIALIZATION

104 — CALL LLVISF

106 — CALL PARSEFILENAMES

108 — VALID FILENAME ?

NO → STOP (109)

READ IN/PROCESS SCANNER HEADER FILE

YES

110 — CALL PROCESSHEADERFILE

INITIALIZE GLOBAL VARIABLES USED FOR DISPLAYING GRAPHICS SCREEN

112 — CALL INITIALIZE-GRAPHICS

114 — CALL BUILDMENU (BUILD MENU ON SCREEN)

INFORM USER OF BANK SWITCH MEMORY INITIALIZATION

116 — CALL ISSUESTATUS-MESSAGE

A

FIG. 3

0176833

**A**

118 — CALL INITIALIZEBANK-SWITCHEDMEMORY

GET VALUE OF HOW MUCH BANK-SWITCHED MEMORY IS AVAILABLE

120 — CALL INITIALIZETILE-STRUCTURE, GETTILESTRUCTURE PARAMETERS

CALL TO SPATIAL LIBRARY ROUTINES

122 — CALL INITIALIZECURSOR-DRAWING

124 — CALL INITIALIZE (NIBBLE CURSOR)

CALL TO SPATIAL LIBRARY ROUTINES

126 — CALL RESETNODE-TRAVERSEDFLAGS

CALL TO SPATIAL LIBRARY ROUTINES

128 — CALL SETTRANSITIONMASK

CALL TO SPATIAL LIBRARY ROUTINES

130 — CALL SETDUPLICATE-OUTPUTENABLED

**B**

**B**

132 — CALL ISSUESTATUSMESSAGE

134 — CALL INITIALIZE DRAWING

136 — CALL READDRAWING

138 — WRITE TO SCREEN INITIAL & REMAINING MEMORY

140 — CALL OPENTABLET

**C** DO FOREVER LOOP

# FIG. 4

(C₁)

TURN OFF
SCREEN CROSSHAIR

152 — CALL
CROSSHAIROFF

DO NOT HIGHLIGHT
ANY MENU ITEMS

154 — CALL
HIGHLIGHT-
MENUITEM

MAKE SURE CURSOR
IS INVISIBLE

156 — CALL
SUSPEND-
TABLETHANDLER

WRITE "WAITING
FOR TABLET"
MESSAGE TO SCREEN

158 — CALL
ISSUE-
STATUSMESSAGE

160 — SET FLAG TO
INDICATE TABLET
WAITING

(C)

FIG.6

(C₂)

164 — IS TABLET WAITING FLAG ON?

YES → 166 — ISSUE A STATUS MESSAGE

FIND OUT THE TYPE OF INPUT PASSING THE X,Y GRAPHIC INTEGER VALUE

NO

168 — RESET FLAG TO INDICATE TABLET NO LONGER WAITING

170 — CALL TABLET-DEMULTIPLEXOR

**FIG. 7**

172 — CON-STRAINED GRAPHICS INPUT ? → YES → (D)

NO

174 — UNCON-STRAINED GRAPHICS INPUT ? → YES → (E)

NO

176 — INPUT A MENU SELECTION ? → YES → (F)

NO

(C)

6/26

0176833

```
                            ( D )
                              │
                              ▼
              YES        ╱─────────╲   NO        ┌──────────────┐
        ┌───────────────┤  IS THE  ├────────────►│   UPDATE     │
        │               │   MENU   │ 180         │  STATUS OF   │
        │               │ VISIBLE  │             │ THE CURSOR   │
        │               │    ?     │             └──────────────┘
        │               ╲─────────╱                     │
        │      ┌──────────────┐                          │
        │ ─ ─ ─│  TURN OFF    │                          │
        │      │  SCREEN      │              ┌────────────────────┐  192
        │      │  CROSSHAIR   │              ║       CALL         ║
        │      └──────────────┘              ║      HANDLE-       ║
 182 ┌──────────────────┐                    ║   TABLETEVENT      ║
     ║      CALL         ║                    └────────────────────┘
     ║   CROSSHAIROFF    ║                              │
     └──────────────────┘                               ▼
        │      ┌──────────────┐                        ( C )
        │ ─ ─ ─│ MAKE DRAWING │
        │      │ VISIBLE AND  │
        │      │MENU INVISBLE │
 184 ┌──────────────────┐
     ║      CALL         ║                  FIG. 8
     ║     LLVISF        ║
     └──────────────────┘
        │      ┌──────────────┐
        │ ─ ─ ─│ SET SCREEN   │
        │      │  INTENSITY   │
 186 ┌──────────────────┐
     ║      CALL         ║
     ║   SETINTENSITY    ║
     └──────────────────┘
        │      ┌──────────────┐
        │ ─ ─ ─│   DO NOT     │
        │      │  HIGHLIGHT   │
        │      │ANY MENU ITEMS│
 188 ┌──────────────────┐
     ║      CALL         ║
     ║    HIGHLIGHT-     ║
     ║    MENUITEM       ║
     └──────────────────┘
        │
 ┌──────────────────┐  190
 │  SET FLAG TO     │
 │ INDICATE MENU    │
 │  NOT VISIBLE     │
 └──────────────────┘
```

7/26

0176833

E

TURN OFF
SCREEN CROSSHAIR

194 — CALL
CROSSHAIROFF

195 — IS THE
MENU VISIBLE
?

NO → C

YES — MAKE DRAWING
VISIBLE AND MENU
INVISIBLE

196 — CALL
LLVISF

197 — CALL
SETINTENSITY

DO NOT HIGHLIGHT
ANY MENU ITEMS

198 — CALL
HIGHLIGHT-
MENUITEM

199 — SET FLAG TO
INDICATE MENU
NOT VISIBLE

C

FIG. 9

0176833

F

173 — IS THE MENU VISIBLE ?

YES

NO — — — MAKE SURE CURSOR IS INVISIBLE

175 — CALL SUSPEND-TABLETHANDLER

177 — CALL SETINTENSITY — — — MAKE MENU VISIBLE AND DIM DRAWING

179 — CALL LLVISF — — — DISPLAY BOTH DRAWING AND MENU ON SCREEN

SET FLAG TO INDICATE MENU IS VISIBLE — 181

— — — TURN ON SCREEN CROSSHAIR

183 — CALL CROSSHAIRON

185 — CALL CHECKMENU — — — PROCESS MENU ITEM SELECTED

C

FIG. 10

## FIG. 11

ENTER — 200

INITIALIZE TERMINAL TYPE — 201

INITIALIZE VARIABLES TO GET COMBINATIONS OF MENU/DRAWING VISIBILITY — 202

INITIALIZE VARIABLES TO PREPARE FOR SCREEN REDRAWING — 204

INITIALIZE VARIABLES ASSOCIATED WITH MODIFICATION OF CURSOR — 206

INITIALIZE VARIABLES NEEDED FOR SAVING TO DRAWING FILE — 208

RETURN — 209

## FIG. 12

ENTER — 210

PARSE FILE NAME IS PASSED FROM MAIN; VALIDATE NAME; WRITE ERROR MESSAGES. ADD EXTENSIONS. — 211

RETURN — 212

## FIG. 13

ENTER — 220

CALL GETFILENAME — 221

RESET THE SCANNER-PRODUCED DRAWING FILE — 222

GET SCANNER LIMITS FROM DRAWING FILE — 223

RETURN — 224

0176833

300 — ( ENTER )

CALL TO EXTERNAL
LTI LIBRARY
ROUTINE TO LOCK
VIEWING KEYS

302 —
CALL
LLVKLK

304 —
CALL
ERASESURFACE

LTI LIBRARY
ROUTINE TO DELETE
THE CURRENT SCREEN
VIEW, IF ANY.

306 —
CALL
LLDLVW

LTI LIBRARY
ROUTINE THAT
DELETES TO CURRENT
SEGMENT, IF ANY.

308 —
CALL
LLDLSG

310 —
INITIALIZE MAXIMUM
SCREEN AND VIEWPORT
DIMENSIONS

LTI LIBRARY
ROUTINE TO SET THE
INITIAL VIEWPORT.

312 —
CALL
LLVWPT

( G )

FIG. 14

(G)

CALL LTI LIBRARY
ROUTINES TO SET
DIALOGUE AREA
PARAMETERS FOR
VISIBILITY,
SURFACE TYPE,
LINES, AND
POSITION. ALSO
SET COLOR MODE.

314

CALL
LLDAVS, LLDASF,
LLDALN, LLDAXY,
LLCLMD

316

INITIALIZE VALUE
FOR CURRENT
COLOR MAP

SET SCREEN COLOR
AND INTENSITY TO
AN INITIAL VALUE

318

CALL
SELECTCOLORMAP

CALL LTI LIBRARY
ROUTINE TO SET
SCREEN SURFACE
VISIBILITY

320

CALL
LLVISF

INITIALIZE THE
LIMITS FOR USERS
ZOOM AND PAN
REQUESTS

322

CALL
SETWINDOWLIMITS

324

RETURN

FIG. 15

ENTER  330

INITIALIZE VARIABLES USED IN THE MENU HANDLING MODULE

331  CALL INITIALIZEMENU

332  SET FLAG INDICATING MENU NOT VISIBLE

FIG.16

334  CALL SELECTMENUSURFACE

335  CALL PROCEDURE TO DRAW BOXES AND WRITE TEXTS IN BOXES FOR VARIOUS MENU ITEMS

336  CALL SELECT-GRAPHICSURFACES

338  RETURN

13/26                    0176833

340  ENTRY

342  INPUT COORDINATES,
     TEXT AND LENGTH OF
     MESSAGE

                        USE ALPHA TEXT
                        (NOT GRAPH TEXT)

344  CALL
     LLGPRC

                        SET VIEW
                        ATTRIBUTES

346  CALL
     LLVWAT

                        SET TEXT POSITION

348  CALL
     LLMOVE

                        SEND TEXT
                        TO SCREEN

350  CALL
     LLTEXT

                        RESET VIEWING
                        ATTRIBUTES

352  CALL
     LLVWAT

                        MOVE CURSOR TO
                        DEFAULT POSITION

354  CALL
     LLMOVE

                        FIG.17

356  RETURN

FIG.18

ENTER — 360

362 — SET TO ZERO BANK MEMORY IDENTIFIER & COUNTER TO ALLOW REINITIALIZATION

364 — SAVE AND CLEAR INTERRUPT AND STATUS FLAGS

366 — CHECK IF MEMORY BOARD IS INSTALLED AT CURRENT PORT

368 — IS BOARD INSTALLED ?

YES

NO

370 — CALL INITIALIZEONEBANK

CALL PROCEDURE WHICH FORMATS MEMORY FOR LATER USE

372 — POINT TO NEXT PORT LOCATION

374 — ALL BOARD LOCATIONS CHECKED ?

NO

YES

376 — RETURN AMOUNT OF AVAILABLE MEMORY IN REGISTER FOR CALLER

378 — RETURN

```
        ( ENTER )  380
  382
  ┌──────────────────┐
  │ TURN OFF CURSOR. │
  │ SET CURSOR MODE. │
  └──────────────────┘
                              ┌─────────────────────┐
                              │        CALL         │
                              │ GETTILESTRUCTURE-   │
  384                         │     PARAMETERS      │
  ╱──────────────────╲        └─────────────────────┘
 ╱ GET PARAMETERS FOR ╲
 ╲    DEFAULT TILE    ╱
  ╲    STRUCTURE     ╱
   ╲────────────────╱

  386
  ┌──────────────────┐
  │   SET INITIAL    │
  │ VALUES FOR X,Y   │        FIG. 19
  │   COORDINATES    │
  │   AND RADIUS     │
  └──────────────────┘

        ( RETURN )  388
```

```
           ( A )

                              ┌─────────────────────┐
                              │   RESYNCHRONIZE     │
  726                         │  BECAUSE OF ERROR   │
  ┌──────────────────┐        └─────────────────────┘
  │    SAVE FLAGS,   │
  │PROHIBIT INTERRUPT,│
  │ RESET STATUS FLAG,│
  │  BUFFER POINTER. │
  └──────────────────┘
                              ┌─────────────────────┐
                              │ RE-INITIALIZE THE   │
  728                         │      TABLET         │
  ┌──────────────────┐        └─────────────────────┘
  │      CALL        │
  │      INIT        │
  └──────────────────┘        FIG. 30

           ( C )
```

**0176833**

```
        ┌──────────┐
  400 ──│  ENTER   │
        └──────────┘
              │
              ▼
  402 ┌─────────────────────┐
      │   INITIALIZE X,Y    │
      │ VALUES FOR LOWER    │
      │  LEFT CORNER OF     │
      │     DRAWING         │
      └─────────────────────┘
              │
              ▼
  404 ┌─────────────────────┐
      │   INITIALIZE X,Y    │
      │ VALUES FOR LOWER    │
      │  RIGHT CORNER OF    │
      │     DRAWING         │
      └─────────────────────┘
              │
              ▼
  406 ┌─────────────────────┐
      │ "FIRSTNODEINDRAWING"│
      │   FLAG SET TO TRUE  │
      └─────────────────────┘
              │
              ▼
  408 ┌─────────────────────┐
      │ SET TO FALSE A FLAG │
      │ INDICATING FAILURE  │
      │  AT LAST ATTEMPT TO │
      │   CONNECT A NODE    │
      └─────────────────────┘
              │
              ▼
  410 ┌─────────────────────┐
      │ SET TO FALSE A FLAG │
      │ INDICATING FAILURE  │
      │  AT LAST ATTEMPT TO │
      │   CREATE A NODE     │
      └─────────────────────┘
              │
              ▼
  412 ┌─────────────────────┐
      │  "OUT OF MEMORY"    │
      │  FLAG SET TO FALSE  │
      └─────────────────────┘
              │
              ▼
  414 ┌─────────────────────┐
      │ SET STATE OF NEW    │
      │  CONNECTION TO      │
      │    UNTAGGED         │
      └─────────────────────┘
              │
              ▼
  416 ┌─────────────────────┐
      │ SET PREVIOUS NODE   │
      │ AND CURRENT NODE    │
      │ VARIABLE TO NIL     │
      └─────────────────────┘
              │
              ▼
  418 ╎┌─────────────────────┐╎
      ╎│      CALL           │╎
      ╎│    SELECT-          │╎
      ╎│  GRAPICSSURFACE     │╎
      ╎└─────────────────────┘╎
              │
              ▼
  420 ┌──────────┐
      │  RETURN  │
      └──────────┘
```

```
        ┌──────────┐
  390 ──│  ENTER   │
        └──────────┘
              │
              ▼
  392 ┌─────────────────────┐
      │ INITIALIZE GLOBAL   │
      │    VARIABLES        │
      │   CURSORSTATUS,     │
      │    SAVEOPEN,        │
      │ PIXELCONTACTRADIUS, │
      │   POLYLINEMODE      │
      └─────────────────────┘
              │
              ▼
  394 ┌──────────┐
      │  RETURN  │
      └──────────┘
```

# FIG. 20

# FIG. 21

17/26

0176833

FIG. 23

0176833

**FIG. 24**

P

536 — IS THIS NODE FIRST NODE IN DRAWING ?

YES

538 — WRITE ERROR MESSAGE TO SCREEN: "... MUST BE MOVE"

Z

NO

PASS CURRENT X,Y DRAWING FILE VALUES AND AN ERROR FLAG

540 — CALL MOVETOPOINT

542 — IS ERROR FLAG = TRUE ?

NO

544 — PREVIOUS NODE <— CURRENT NODE

Z

YES

Z

19/26

0176833

FIG.25

0176833

600 — ( ENTER )

602 — SAVE REGISTERS.
LOAD POINTER TO DATA.
SAVE INTERRUPT STATUS.
DISABLE INTERRUPTS.

ASSEMBLY LANGUAGE
SUBROUTINE TO
INITIALIZE THE
3PPI PORT AND THE
4957 TABLET

604 — CALL
INIT

608 — ESTABLISH INTERRUPT
VECTORS

610 — LOAD AND SAVE POINTER
TO TABLET INTERRUPT
HANDLER ROUTINE

612 — RESTORE FLAGS AND
LOAD CALLER'S
RETURN ADDRESS

**FIG. 26**

614 — ( RETURN )

24/26

0176833

FIG. 27

22/26

0176833

SET NUMBER OF
DIALOGUE AREA LINES

634 — CALL
LLDALN

SET DIALOGUE AREA
TO VISIBLE

636 — CALL
LLDAVS

SET COLOR AND
INTENSITY OF SCREEN

638 — CALL
SELECTCOLORMAP

MAKE BOTH DRAWING
AND MENU VISIBLE

640 — CALL
LLVISF

FIG. 28

642 — RETURN TO CP/M

0176833

```
                    ┌──────────┐
                    │  ENTER   │ ─── 700
                    └──────────┘
                          │
702 ─┐                    ▼
     ┌──────────────────────────┐
     │   SAVE CALLER'S          │
     │ REGISTERS. POINT TO      │
     │ STORAGE LOCATION.        │
     └──────────────────────────┘
                          │
                          ▼
                        704
           NO      ╱ OVERRUN, ╲      YES
706 ─┐  ◄─────────  FRAMING OR  ─────────►  (A)
     ┌──────────┐  ╲  PARITY  ╱
     │SAVE FLAGS│   ╲ ERROR? ╱
     └──────────┘
          │
          ▼
     ┌──────────────────┐
     │DISABLE INTERRUPTS│
     └──────────────────┘
707 ─┘    │
          │                    708
          ▼          ╱   IS    ╲
          └────────►  TABLET    ╲   NO
                    ╲SYNCHRONIZED─────────►  (A)
                     ╲WITH TEKMAN╱
                      ╲    ?    ╱
                          │ YES
                          ▼
                        710
          YES    ╱   IS    ╲      NO
     ◄─────────  STYLUS IN  ─────────►  (B)
              ╲PROXIMITY WITH╱
716 ─┐         ╲  TABLET   ╱              ┌──── 712
     ┌──────────┐  ╲   ?   ╱         ┌────────────────────┐
     │   CALL   │                    │STORE "Z" PARAMETER │
     │ COMPACT3 │                    │  FOR CALLER.       │
     └──────────┘                    │ RESTORE CALLER'S   │
          │                          │  REGISTERS.        │
          ▼                          └────────────────────┘
     ┌──────────────┐                         │
     │SAVE X,Y VALUES│                        ▼
     └──────────────┘      ┌──────────────┐ ┌──────────┐
718 ─┘    │ NO            │CONVERT INPUT │ │ RETURN   │─── 714
          ▼               │FROM STYLUS TO│ └──────────┘
         (B)              │PASCAL FORMAT │
                          └──────────────┘
```

# FIG. 29

740 ENTER

742 CALL SELECT-CURSORSURFACE

ERASE MODE

744 CALL SETLINEINDEX

TURN OFF "X" CROSSHAIR

746 CALL PIXELMOVECLIPPED, PIXELDRAWCLIPPED

TURN OFF "Y" CROSSHAIR

748 CALL PIXELMOVECLIPPED, PIXELDRAWCLIPPED

750 CALL SELECT GRAPHICSSUFACE

752 RETURN

FIG. 31

25/26

0176833

```
                    ( ENTER )  760

762
    INPUT THE X,Y
   GRAPHICS INTEGER
       VALUES

              CHECK THE X,Y
             VALUES TO SEE IF
            STYLUS IN RANGE OF
            MENU OR DRAWING

                         764
         IS Y
YES    VALUE IN       NO
      CONSTRAINED
        RANGE
          ?
                              768
                         IS X
                       VALUE IN      NO
766                  UNCONSTRAINED
  TABLETDEMULTIPLEXOR    RANGE
       : =               ?
    CONSTRAINED
                                        772
                        YES     TABLETDEMULTIPLEXOR
                                     : =
                                  MENUSELECTION
               770
           TABLEDEMULTIPLEXOR
                : =
            UNCONSTRAINED

                              774
                   ( RETURN )
```

# FIG. 32

0176833

# FIG. 33

ENTER — 800

802 — CALL DRAWCURSOR

804 — CALL PIXELTODRAWING-COORDINATES

ANALYZE CURRENT AND PREVIOUS Z VALUE TO DETERMINE APPROPRIATE ACTION

806 — CALL SINGLECURSORACTION

808 — SINGLE-CURSORACTION =NOACTION ?
YES → 810 — CALL CROSSHAIRON
NO ↓

812 — SINGLE-CURSORACTION =ENTERWRITE-MODE ?
YES → A
NO ↓

814 — SINGLE-CURSORACTION =STAYINWRITE-MODE ?
YES → 816 — CALL UPDATE-NIBBLECURSOR
NO ↓

818 — SINGLE-CURSORACTION =ENTERLIMBO ?
YES → 820 — CALL CROSSHAIRON
822 — CURSOR STATUS := LIMBO
NO ↓

824 — RETURN

A

826 — CALL RESETNODETRAVERSED FLAG

CALL CROSSHAIROFF
828 —

GET CONTACTRADIUS

830 — CALL PIXELTODRAWINGSIZE FUNCTION

GET CURSORSTATUS

832 — CALL WRITEMODE FUNCTION

CALL UPDATENIBBLECURSOR
834 —